# EUROPEAN PATENT APPLICATION

(11) **EP 4 823 129 A1**
(43) Date of publication of application: **14.10.2026**
(21) Application number: 24899436.0
(22) Date of filing: 25.09.2024
(51) Int. Cl.: H04W 4/24, H04L 12/14

(54) **SENSING SERVICE CHARGING METHOD, COMMUNICATION APPARATUS, AND SYSTEM**

(30) Priority: 06.12.2023 CN 202311671278
(71) Applicant: Huawei Technologies Co., Ltd., Shenzhen, Guangdong 518129 (CN)
(72) Inventor: XI, Yan, Shenzhen, Guangdong 518129 (CN); YAN, Xueqiang, Shenzhen, Guangdong 518129 (CN); ZHAO, Mingyu, Shenzhen, Guangdong 518129 (CN); WANG, Junfan, Shenzhen, Guangdong 518129 (CN)
(74) Representative: Huawei European IPR
(86) International application number: PCT/CN2024/121089
(87) International publication number: WO 2025/118792

(57) **Abstract**

This application provides a charging method for a sensing service, and a communication apparatus and system, and relates to the field of sensing technologies. In the method, a sensing service control network element may deliver charging configuration information to a data function network element after determining the charging configuration information, and the data function network element performs charging processing on a sensing service based on the charging configuration information, so that charging processing performed on the sensing service can be supported.

## Description

This application claims priority to Chinese Patent Application No. 202311671278.7, filed with the China National Intellectual Property Administration on December 6, 2023 and entitled "CHARGING METHOD FOR SENSING SERVICE, AND COMMUNICATION APPARATUS AND SYSTEM", which is incorporated herein by reference in its entirety.

### TECHNICAL FIELD

This application relates to the field of communication technologies, and more specifically, to a charging method for a sensing service, and a communication apparatus and system.

### BACKGROUND

Both wireless communication and wireless sensing are based on an electromagnetic wave theory. At a transmitting side, an electromagnetic wave signal is modulated, so that the electromagnetic wave carries source information. During propagation, the electromagnetic wave signal is affected by a wireless environment, that is, the electromagnetic wave signal is modulated by the environment and therefore also carries environment information. By analyzing the electromagnetic wave signal at a receiving side, not only can the carried source information be obtained, but sensing information reflecting characteristics of the propagation environment can also be extracted, which makes integrated sensing and communication possible.

Communication systems are evolving develops toward higher frequency bands, larger bandwidth, and denser distribution of large-scale antenna arrays, so that a single system can integrate a sensing capability and a communication capability, and performance of systems can be improved mutually. As a basic feature of the communication system, sensing can observe and sample the physical world and the biological world, thereby opening a "new channel" for the integration of the physical world and the biological world with a digital world.

There may be a large quantity of sensing services in the communication systems, and how to perform charging processing on the sensing services is a technical problem to be urgently resolved.

### SUMMARY

This application provides a charging method and a communication apparatus, so that charging processing performed on a sensing service can be supported.

According to a first aspect, a charging method for a sensing service is provided, and is applied to a sensing service control network element. The method includes: determining charging configuration information, where the charging configuration information is used to perform charging processing on the sensing service; and sending the charging configuration information to a data function network element.

In the foregoing solution, the sensing service control network element may deliver the charging configuration information to the data function network element after determining the charging configuration information, and the data function network element performs charging processing on the sensing service based on the charging configuration information, so that charging processing performed on the sensing service can be supported.

The data function network element is deployed, so that overall duration required for performing charging processing on the sensing service can be shortened in embodiments of this application. For example, the data function network element performs, based on the charging configuration information, statistical collection processing on obtained sensing data of the sensing service to obtain corresponding charging information, and feeds back the charging information. A network element responsible for a charging function directly performs charging processing on the sensing service based on the charging information.

In the first aspect, the charging configuration information includes a charging parameter; and determining the charging configuration information includes: sending first information to a charging function network element, where the first information is used to request the charging parameter; and receiving the charging parameter from the charging function network element.

In this way, the charging parameter may be obtained.

In the first aspect, the charging configuration information includes a charging parameter; and determining the charging configuration information includes: the charging parameter is preconfigured, or the charging parameter is predefined.

In this way, signaling exchange overheads for obtaining the charging parameter can be reduced.

In the first aspect, the charging configuration information includes a charging policy; and determining the charging configuration information includes: sending second information to a policy control network element, where the second information is used to request the charging policy; and receiving the charging policy from the policy control network element.

In this way, the charging policy may be obtained.

In the first aspect, the charging configuration information includes a charging policy; and determining the charging configuration information includes: the charging policy is preconfigured, or the charging policy is predefined.

In this way, signaling exchange overheads for obtaining the charging policy can be reduced.

In the first aspect, the method further includes: receiving charging information of the sensing service from the data function network element; and sending third information to the charging function network element in response to the charging information, where the third information is used to request a second charging quota of the sensing service, and the second charging quota is associated with the charging information.

The second charging quota of the sensing service is exchanged, so that it can be avoided that an economic loss is caused because a sensing service user still continues to use the sensing service when a charging quota of the sensing service used by the sensing service user is used up.

In the first aspect, before determining the charging configuration information, the method further includes: receiving fourth information from the sensing service user, where the fourth information is used to request the sensing service.

In this way, the sensing service control network element may determine, based on the request information sent by the sensing service user, the corresponding charging configuration information, so that charging processing performed on the sensing service can be supported.

According to a second aspect, a charging method for a sensing service is provided, and is applied to a data function network element. The method includes: receiving charging configuration information from a sensing service control network element; and performing charging processing on the sensing service based on the charging configuration information.

In the second aspect, the method further includes: sending charging information of the sensing service to the sensing service control network element; and receiving a second charging quota of the sensing service from the sensing service control network element, where the second charging quota is determined based on the charging information.

The second charging quota of the sensing service is exchanged, so that it can be avoided that an economic loss is caused because a sensing service user still continues to use the sensing service when a charging quota of the sensing service used by the sensing service user is used up. With reference to the solution according to either of the first aspect and the second aspect, the charging configuration information includes one or both of a charging policy or a charging parameter.

For example, when the charging configuration information includes a charging policy, the charging policy indicates a policy used when charging is performed on the sensing service.

For another example, when the charging configuration information includes a charging parameter, the charging parameter indicates a parameter used when charging is performed on the sensing service.

For another example, when the charging configuration information includes a charging policy and a charging parameter, the charging policy and the charging parameter respectively indicate a policy and a parameter used when charging is performed on the sensing service.

Based on the charging policy and/or the charging parameter, charging processing performed on the sensing service can be supported in embodiments of this application.

With reference to the solution according to either of the first aspect and the second aspect, the charging policy includes one or both of a charging manner or a charging granularity.

Based on the charging granularity and/or the charging manner, the data function network element may complete statistical collection processing on the sensing service; and based on information obtained through statistical collection processing, charging processing performed on the sensing service may be supported in embodiments of this application.

With reference to the solution according to either of the first aspect and the second aspect, the charging manner includes one or both of online charging or offline charging.

When the charging manner is online charging, the data function network element may obtain the charging information of the sensing service in real time. This helps monitor an account balance of the sensing service user in real time, and stop the sensing service user from continuing to use the sensing service in time when the account balance of the sensing service user is used up.

When the charging manner is offline charging, the data function network element may obtain the charging information of the sensing service at specified time. This helps reduce signaling exchange overheads of the data function network element. For example, the data function network element does not need to frequently report the charging information of the sensing service and the like to the sensing service control network element.

With reference to the solution according to either of the first aspect and the second aspect, the charging granularity includes one or both of service-based charging or quality of service flow-based charging.

When the charging granularity is service-based charging, the data function network element may perform proper statistical collection, based on a type of the sensing service performed by the sensing service user, on the sensing service performed by the sensing service user, and obtain the corresponding charging information, so that charging processing performed on the sensing service can be supported.

When the charging granularity is quality of service flow-based charging, the data function network element may perform proper statistical collection, based on a quality of service flow of the sensing service performed by the sensing service user, on the sensing service performed by the sensing service user, and obtain the corresponding charging information, so that charging processing performed on the sensing service can be supported.

When the charging granularity is service-based charging and quality of service flow-based charging, the data function network element may perform proper statistical collection, based on a quality of service flow and a type of the sensing service performed by the sensing service user, on the sensing service performed by the sensing service user, and obtain the corresponding charging information, so that charging processing performed on the sensing service can be supported.

With reference to the solution according to either of the first aspect and the second aspect, the charging parameter includes at least one of the following: a charging mode, a charging event, a first charging quota, or a threshold of the charging event.

When the charging parameter includes a charging mode, the data function network element may determine a mode for charging the sensing service.

When the charging parameter includes a charging event, the data function network element may determine a condition for reporting the charging information of the sensing service to the sensing service control network element.

When the charging parameter includes a first charging quota, the data function network element may determine an initial quota configured when the sensing service user performs the sensing service. The first charging quota is delivered to control a quantity of charging data records and a quantity of pieces of information that is sent by the data function network element to the sensing service control network element, thereby reducing signaling exchange overheads. In addition, impact on load of a charging function network element may be further reduced.

When the charging parameter includes a threshold of the charging event, the data function network element may determine a specific condition for reporting the charging information of the sensing service to the sensing service control network element. With reference to the solution according to either of the first aspect and the second aspect, the charging mode includes at least one of the following: traffic-based charging, duration-based charging, service occurrence time point-based charging, or service occurrence count-based charging.

Based on one or more of the foregoing items, charging processing performed on the sensing service can be supported in embodiments of this application. For example, the data function network element may determine specific content that requires statistical collection when the sensing service user performs the sensing service.

With reference to the solution according to either of the first aspect and the second aspect, the charging event includes at least one of the following: traffic reaching a threshold, duration reaching a threshold, a change of a service occurrence time point, or a service occurrence count reaching a threshold.

Based on one or more of the foregoing items, charging processing performed on the sensing service can be supported in embodiments of this application. For example, the data function network element may determine a condition for reporting the charging information to the sensing service control network element.

With reference to the solution according to either of the first aspect and the second aspect, the threshold of the charging event includes at least one of the following: a traffic threshold, a duration threshold, or a service occurrence count threshold.

Based on one or more of the foregoing items, charging processing performed on the sensing service can be supported in embodiments of this application. For example, the data function network element may determine a specific condition for reporting the charging information to the sensing service control network element.

According to a third aspect, a charging method for a sensing service is provided, including: receiving registration information from a sensing service user, where the registration information is used to request to complete registration of the sensing service user, and the sensing service user is a user that requires the sensing service; and sending first response information to the sensing service user, where the first response information is used to respond to the registration information.

According to the method, completing a registration procedure for the sensing service user may be supported in embodiments of this application.

In the third aspect, the method further includes: receiving request information from the sensing service user, where the request information is used to request the sensing service; and sending second response information to the sensing service user, where the second response information is used to respond to the request information.

According to the method, the sensing service user may be supported in requesting to perform or use the sensing service in embodiments of this application.

In the third aspect, the registration information includes at least one of the following: a user name, a user identifier, a user type, authentication data, and a charging attribute.

Based on one or more of the foregoing items, a sensing service user management network element may obtain related information of the sensing service user, and can complete registration management of the sensing service user based on the related information.

In the third aspect, the registration information further includes at least one of the following: a request-allowed sensing service type, a service-prohibited area, a user priority, or service subscription information.

Based on one or more of the foregoing items, the sensing service user management network element may further complete registration management of the sensing service user.

According to a fourth aspect, a communication system is provided, including: a sensing service control network element, configured to determine charging configuration information, where the charging configuration information is used to perform charging processing on a sensing service; and the sensing service control network element is further configured to send the charging configuration information to a data function network element; and the data function network element, configured to receive the charging configuration information, and further configured to perform charging processing on the sensing service based on the charging configuration information.

The sensing service control network element may be further configured to perform the method in the first aspect. The data function network element may be further configured to perform the method in the second aspect.

Optionally, the communication system may further include a policy control network element, configured to perform the method in the first aspect.

Optionally, the communication system may further include a charging function network element, configured to perform the method in the first aspect.

Optionally, the communication system may further include a sensing service user management network element, configured to perform the method in the third aspect.

According to a fifth aspect, a communication apparatus is provided, including: a processing unit, configured to determine charging configuration information, where the charging configuration information is used to perform charging processing on a sensing service; and an interface unit, configured to send the charging configuration information to a data function network element.

The communication apparatus according to the fifth aspect may be configured to perform the method according to any one of the first aspect and the possible implementations of the first aspect. For details, refer to the descriptions of the method according to any one of the first aspect and the possible implementations of the first aspect. Details are not described again.

According to a sixth aspect, a communication apparatus is provided, including: an interface unit, configured to receive charging configuration information from a sensing service control network element, where the charging configuration information is used to perform charging processing on a sensing service; and a processing unit, configured to perform charging processing on the sensing service based on the charging configuration information.

The communication apparatus according to the sixth aspect may be configured to perform the method according to any one of the second aspect and the possible implementations of the second aspect. For details, refer to the descriptions of the method according to any one of the second aspect and the possible implementations of the second aspect. Details are not described again.

According to a seventh aspect, a communication apparatus is provided, including: an interface unit, configured to receive registration information from a sensing service user, where the registration information is used to request to complete registration of the sensing service user, and the sensing service user is a user that requires the sensing service; and the interface unit is further configured to send first response information to the sensing service user, where the first response information is used to respond to the registration information.

In a possible implementation, the communication apparatus may further include a processing unit, configured to process information processing content of the communication apparatus. For specific descriptions, refer to the foregoing descriptions. Details are not described again.

The communication apparatus according to the seventh aspect may be configured to perform the method according to any one of the third aspect and the possible implementations of the third aspect. For details, refer to the descriptions of the method according to any one of the third aspect and the possible implementations of the third aspect. Details are not described again.

According to an eighth aspect, a communication apparatus is provided, including a processor. The processor is configured to, by executing a computer program or instructions or by using a logic circuit, cause the communication apparatus to perform the method according to any one of the first aspect and the possible implementations of the first aspect, or cause the communication apparatus to perform the method according to any one of the second aspect and the possible implementations of the second aspect, or cause the communication apparatus to perform the method according to any one of the third aspect and the possible implementations of the third aspect.

According to a ninth aspect, a communication apparatus is provided, including a logic circuit and an input/output interface. The input/output interface is configured to input and/or output a signal, and the logic circuit is configured to perform the method according to any one of the first aspect and the possible implementations of the first aspect; or the logic circuit is configured to perform the method according to any one of the second aspect and the possible implementations of the second aspect; or the logic circuit is configured to perform the method according to any one of the third aspect and the possible implementations of the third aspect.

According to a tenth aspect, a computer-readable storage medium is provided. The computer-readable storage medium stores a computer program or instructions. When the computer program or the instructions are run on a computer, the method according to any one of the first aspect and the possible implementations of the first aspect is performed; or the method according to any one of the second aspect and the possible implementations of the second aspect is performed; or the method according to any one of the third aspect and the possible implementations of the third aspect is performed.

According to an eleventh aspect, a computer program product is provided, including instructions. When the instructions are run on a computer, the method according to any one of the first aspect and the possible implementations of the first aspect is performed; or the method according to any one of the second aspect and the possible implementations of the second aspect is performed; or the method according to any one of the third aspect and the possible implementations of the third aspect is performed.

According to a twelfth aspect, an embodiment of this application provides a communication apparatus, including a module configured to perform the method in all the possible implementations of the first aspect, the second aspect, or the third aspect.

According to a thirteenth aspect, an embodiment of this application provides a communication apparatus, including an interface circuit and a processor. The communication apparatus is configured to perform the method according to any possible implementation of the first aspect, the second aspect, or the third aspect.

The interface circuit may also be a communication interface. The processor may also be a logic circuit or a processing circuit.

According to a fourteenth aspect, an embodiment of this application provides a processor, configured to be coupled to a memory, and configured to perform the method according to any possible implementation of the first aspect, the second aspect, or the third aspect.

According to a fifteenth aspect, a communication apparatus is provided, including a processor, configured to execute computer instructions stored in a memory, to cause the communication apparatus to perform the method according to any possible implementation of the first aspect, the second aspect, or the third aspect.

In a possible implementation, the communication apparatus further includes the memory.

In a possible implementation, the communication apparatus further includes a communication interface. The communications interface is coupled to the processor, and the communication interface is configured to input and/or output information.

According to a sixteenth aspect, a chip is provided. The chip is connected to a memory, and the chip is configured to read and execute a software program stored in the memory, to perform the method according to any possible implementation of the first aspect, the second aspect, or the third aspect.

### BRIEF DESCRIPTION OF DRAWINGS

FIG. 1 is a diagram of a communication system 100 to which an embodiment of this application is applicable;
FIG. 2A to FIG. 2F are diagrams of a sensing scenario 200 according to an embodiment of this application;
FIG. 3A to FIG. 3H are diagrams of a networking architecture 300 according to an embodiment of this application;
FIG. 4 is an interaction flowchart of a charging method 400 of a sensing service according to an embodiment of this application;
FIG. 5 is an interaction flowchart of a charging method 500 of a sensing service according to an embodiment of this application;
FIG. 6 is an interaction flowchart of a charging method 600 of a sensing service according to an embodiment of this application;
FIG. 7 is an interaction flowchart of a charging method 700 of a sensing service according to an embodiment of this application;
FIG. 8 is an interaction flowchart of a charging method 800 of a sensing service according to an embodiment of this application;
FIG. 9 is an interaction flowchart of a charging method 900 of a sensing service according to an embodiment of this application;
FIG. 10 is a diagram of a communication apparatus 1000 according to an embodiment of this application; and
FIG. 11 is a diagram of a communication apparatus 1100 according to an embodiment of this application.

### DESCRIPTION OF EMBODIMENTS

The following describes technical solutions of this application with reference to the accompanying drawings.

For ease of understanding embodiments of this application, the following descriptions are first provided.
1. Unless otherwise specified, "a plurality of" means two or more.
2. Unless otherwise stated or there is a logic conflict, terms and/or descriptions in different embodiments of this application are consistent and may be mutually referenced, and technical features in different embodiments may be combined based on an internal logical relationship thereof, to form a new embodiment.
3. Various numbers in this application are merely used for differentiation for ease of description, but are not used to limit the protection scope of this application. Sequence numbers in this application do not mean an execution sequence, and the execution sequence of processes should be determined based on functions and internal logic of the processes. For example, in this specification, the claims, and the accompanying drawings of this application, the terms "first", "second", "third", "fourth", and various other term numerals (if existent) are intended to distinguish between similar objects, but do not necessarily indicate a specific order or sequence. Data used in such a way is interchangeable in appropriate circumstances, so that embodiments described herein can be implemented in other orders than the order illustrated or described herein.
   In addition, any embodiment or design solution described as an "example" or "for example" in this application should not be explained as being more preferred or having more advantages than another embodiment or design solution. Exactly, use of the terms such as "example" or "for example" is intended to present a related concept in a specific manner for ease of understanding.
4. The terms "include", "have", and any other variants thereof are intended to cover a non-exclusive inclusion. For example, a process, a method, a system, a product, or a device that includes a series of steps or units is not necessarily limited to those expressly listed steps or units, but may include other steps or units not expressly listed or inherent to such a process, method, product, or device.
5. In this application, "indicate" may be understood as "enable", and "enable" may include "directly enable" and "indirectly enable". When a piece of information is described to enable A, the information may directly enable A or indirectly enable A, but it does not mean that the information definitely carries A.
   Information enabled by the information is referred to as to-be-enabled information. In a specific implementation process, the to-be-enabled information may be enabled in many manners, for example, but not limited to, the to-be-enabled information may be directly enabled, such as the to-be-enabled information or an index of the to-be-enabled information. Alternatively, the to-be-enabled information may be indirectly enabled by enabling other information, where there is an association relationship between the other information and the to-be-enabled information. Alternatively, only a part of the to-be-enabled information may be enabled, and the other part of the to-be-enabled information is known or preagreed on. For example, specific information may alternatively be enabled through a preagreed (for example, specified in a protocol) sequence of all information, to reduce enabling overheads to some extent. In addition, a common part of all information may be identified and enabled in a unified manner, to reduce enabling overheads caused by enabling the same information separately.
6. In this application, the term "preconfiguration" may include predefinition, for example, definition in a protocol. "Predefinition" may be implemented by prestoring, in a device (including, for example, network elements), corresponding code, a corresponding table, or other related information that may be used for indication. A specific implementation thereof is not limited in this application.
7. "Storage" or "store" in this application may mean "being stored" in one or more memories. The one or more memories may be separately disposed, or may be integrated into an encoder, a decoder, a processor, or a communication apparatus. Alternatively, a part of the one or more memories may be separately disposed, and a part of the one or more memories are integrated into the decoder, the processor, or the communication apparatus. A type of the memory may be a storage medium in any form. This is not limited.
8. "Protocol" in this application may be a standard protocol in the communication field, for example, may include a 4^{th} generation (4^{th} generation, 4G) network protocol, a 5^{th} generation (5^{th} generation, 5G) network protocol, an NR protocol, a 5.5G network protocol, a 6^{th} generation (6^{th} generation, 6G) network protocol, and a related protocol applied to a future communication system. This is not limited in this application.
9. Arrows or blocks shown by dashed lines in diagrams of the accompanying drawings in this specification of this application indicate optional steps or optional modules.
10. Unless otherwise specified, "/" represents an "or" relationship between associated objects. For example, A/B may represent A or B. "And/or" in this application describes only an association relationship of the associated objects and represents that three relationships may exist. For example, A and/or B may represent the following three cases: Only A exists, both A and B exist, and only B exists, where A and B may be singular or plural.
11. In this application, "indication" may include a direct indication, an indirect indication, an explicit indication, and an implicit indication. When a piece of indication information is described as indicating A, it may be understood that the indication information carries A, directly indicates A, or indirectly indicates A.
   In this application, information indicated by the indication information is referred to as to-be-indicated information. In a specific implementation process, there are many manners of indicating the to-be-indicated information. For example, the manners include but are not limited to a manner in which the to-be-indicated information, for example, the to-be-indicated information or an index of the to-be-indicated information, may be directly indicated. Alternatively, the to-be-indicated information may be indirectly indicated by indicating other information, where there is an association relationship between the other information and the to-be-indicated information. Alternatively, only a part of the to-be-indicated information may be indicated, and the other part of the to-be-indicated information is known or preagreed on. For example, specific information may alternatively be indicated through a preagreed (for example, specified in a protocol) sequence of all information, to reduce indication overheads to some extent. In addition, the to-be-indicated information may be sent as a whole, or may be divided into a plurality of pieces of sub-information to be sent separately, where sending periodicities and/or sending occasions of these pieces of sub-information may be the same or different.
12. In this application, "sending" and "receiving" indicate signal transmission directions. For example, "sending information to XX" may be understood as that a destination end of the information is XX, and may include direct sending through an air interface, or include indirect sending through an air interface by another unit or module. "Receiving information from YY" may be understood as that a source end of the information is YY, and may include direct receiving from YY through an air interface, or may include indirect receiving from YY through an air interface from another unit or module. "Sending" may also be understood as "outputting" of a chip interface, and "receiving" may also be understood as "inputting" of the chip interface. In other words, sending and receiving may be performed between devices, for example, between a network device and a terminal device; or may be performed inside a device, for example, sending or receiving between components, modules, chips, software modules, or hardware modules inside the device through a bus, a cable, or an interface.

A communication system to which embodiments of this application are applicable is first described.

The technical solutions provided in this application may be applied to various communication systems, such as a 5^{th} generation (5^{th} generation, 5G) or new radio (new radio, NR) system, a long-term evolution (long-term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

A terminal device in embodiments of this application includes various devices having a wireless communication function, and may be configured to connect to a person, an object, a machine, and the like. The terminal device may be widely used in various scenarios, such as cellular communication, D2D, V2X, peer-to-peer (peer-to-peer, P2P), M2M, MTC, IoT, virtual reality (virtual reality, VR), augmented reality (augmented reality, AR), industrial control, automated driving, telemedicine, a smart grid, smart furniture, a smart office, smart wearable, smart transportation, a smart city drone, a robot, remote sensing, passive sensing, positioning, navigation and tracking, and autonomous delivery. The terminal device may be a terminal such as an MTC terminal or an IoT terminal in any one of the foregoing scenarios. The terminal device may be user equipment (user equipment, UE) in a 3^{rd} generation partnership project (3^{rd} generation partnership project, 3GPP) standard, a terminal (terminal), a fixed device, a mobile station (mobile station) device or a mobile device, a subscriber unit (subscriber unit), a handheld device, a vehicle-mounted device, a wearable device, a cellular phone (cellular phone), a smartphone (smartphone), a SIP phone, a wireless data card, a personal digital assistant (personal digital assistant, PDA), a computer, a tablet computer, a notebook computer, a wireless modem, a handset (handset), a laptop computer (laptop computer), a computer having a wireless transceiver function, a smart book, a vehicle, a satellite, a global positioning system (global positioning system, GPS) device, a target tracking device, a flight device (for example, an uncrewed aerial vehicle, a helicopter, a multi-helicopter, a four-helicopter, or an airplane), a ship, a remote control device, a smart home device, or an industrial device; may be an apparatus (for example, a communication module, a modem, or a chip in the foregoing device) built in the foregoing device; or may be another processing device connected to a wireless modem. For ease of description, an example in which the terminal device is a terminal or UE is used below for description.

In some scenarios, the terminal device may alternatively serve as a base station. For example, the terminal device may act as a scheduling entity, and provide a sidelink (sidelink) signal between UEs in a scenario such as V2X, D2D, or P2P.

In embodiments of this application, an apparatus configured to implement a function of the terminal device may be a terminal device, or may be an apparatus that can support the terminal device in implementing the function, for example, a chip system or a chip. The apparatus may be mounted in the terminal device. In embodiments of this application, the chip system may include a chip, or may include a chip and another discrete device.

The network device in embodiments of this application may be a device for communicating with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover various names in the following in a broad sense, or may be replaced with the following names, for example, a NodeB (NodeB), an evolved NodeB (evolved NodeB, eNB), a next-generation NodeB (next-generation NodeB, gNB), a relay station, an access point, a transmitting and receiving point (transmitting and receiving point, TRP), a transmitting point (transmitting point, TP), a primary station, a secondary station, a multi-standard radio (motor slide retainer, MSR) node, a home base station, a network controller, an access node, a wireless node, an access point (AP), a transmission node, a transceiver node, a baseband unit (BBU), a remote radio unit (remote radio unit, RRU), an active antenna unit (active antenna unit, AAU), a remote radio head (remote radio head, RRH), a central unit (central unit, CU), a distributed unit (distributed unit, DU), a positioning node, and the like. The base station may be a macro base station, a micro base station, a relay node, a donor node, or the like, or a combination thereof. The base station may alternatively be a communication module, a modem, or a chip disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks of a same access technology or different access technologies. A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a position of the mobile base station. In other examples, a helicopter or an uncrewed aerial vehicle may be configured as a device for communicating with another base station.

In embodiments of this application, an apparatus configured to implement a function of the network device may be a terminal device, or may be an apparatus that can support the network device in implementing the function, for example, a chip system or a chip. The apparatus may be mounted in the network device. In embodiments of this application, the chip system may include a chip, or may include a chip and another discrete device.

The network device and the terminal device may be deployed on land, including an indoor or outdoor device, a handheld device, or a vehicle-mounted device; may be deployed on a water surface; or may be deployed on an airplane, a balloon, and a satellite in air. A scenario in which the network device and the terminal device are located is not limited in embodiments of this application.

First, a network architecture applicable to embodiments of this application is briefly described as follows.

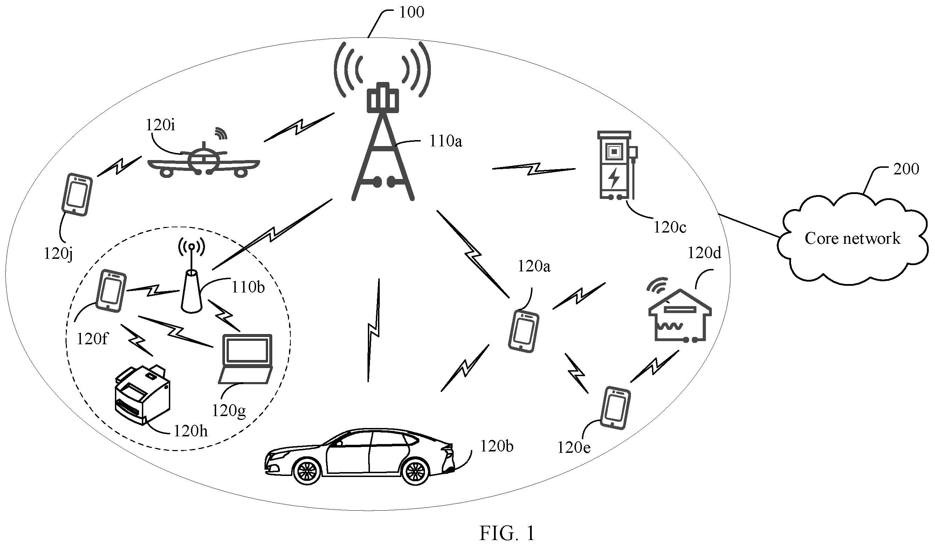

FIG. 1 is a diagram of a communication system 100 to which an embodiment of this application is applicable. As shown in FIG. 1, the communication system 100 includes a radio access network (radio access network, RAN) 100 and a core network (core network, CN) 200. The RAN 100 includes at least one RAN node (for example, 110a and 110b, which are collectively referred to as 110) and at least one terminal device (for example, 120a to 120j, which are collectively referred to as 120). The RAN 100 may further include another RAN node, for example, a wireless relay device and/or a wireless backhaul device (not shown in FIG. 1). The terminal device 120 is connected to the RAN node 110 in a wireless manner. The RAN node 110 is connected to the core network 200 in a wireless or wired manner. A core network device in the core network 200 and the RAN node 110 in the RAN 100 may respectively be different physical devices, or may be a same physical device that integrates a logical function of the core network and a logical function of the radio access network.

The RAN 100 may be a 3GPP-related cellular system, for example, a 4G or 5G mobile communication system, or a future-oriented evolved system (for example, a 6G mobile communication system). The RAN 100 may alternatively be an open radio access network (open RAN, O-RAN, or ORAN), a cloud radio access network (cloud RAN, CRAN), or a wireless high fidelity (wireless fidelity, Wi-Fi) system. The RAN 100 may alternatively be a communication system that integrates the foregoing two or more systems.

The RAN node 110 may also be sometimes referred to as an access network device, a RAN entity, an access node, or the like, and forms a part of the communication system, to help the terminal device implement radio access. A plurality of RAN nodes 110 in the communication system may be nodes of a same type, or may be nodes of different types. In some scenarios, roles of the RAN node 110 and the terminal device 120 are relative. For example, the network element 120i may be a helicopter or an uncrewed aerial vehicle, and may be configured as a mobile base station. For the terminal device 120j that accesses the RAN 100 through the network element 120i, the network element 120i is a base station. However, for the base station 110a, the network element 120i is a terminal device. The RAN node 110 and the terminal 120 are sometimes referred to as communication apparatuses. For example, the network elements 110a and 110b may be understood as communication apparatuses having a base station function, and the network elements 120a to 120j may be understood as communication apparatuses having a terminal function.

In a possible scenario, the RAN node may be a BS, an eNodeB, an access point (access point, AP), a TRP, a gNB, a next-generation base station in a 6G mobile communication system, a base station in a future mobile communication system, an access node in a Wi-Fi system, or the like. The RAN node may be a macro base station (for example, 110a in FIG. 1), a micro base station or an indoor station (for example, 110b in FIG. 1), a relay node or a donor node, or a radio controller in a CRAN scenario.

Optionally, the RAN node may alternatively be a server, a wearable device, a vehicle, a vehicle-mounted device, or the like. For example, an access network device in a V2X technology may be a roadside unit (roadside unit, RSU) or a base station. All or a part of functions of the RAN node in this application may alternatively be implemented by using a software function running on hardware, or may be implemented by using a virtualization function instantiated on a platform (for example, a cloud platform). Alternatively, the RAN node in this application may be a logical node, a logical module, or software that can implement all or a part of functions of the RAN node.

In another possible scenario, a plurality of RAN nodes coordinate to assist the terminal device in implementing radio access, and different RAN nodes separately implement a part of functions of a base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different communication systems, the CU (or the CU-CP and the CU-UP), the DU, or the RU may also have different names, but a person skilled in the art may understand meanings thereof. For example, in an open radio access network (open radio access network, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by using a software module, a hardware module, or a combination of a software module and a hardware module.

A quantity of devices in the communication system is merely used as an example, and is not limited thereto. During actual application, the communication system may further include more terminal devices and more RAN devices, or may further include another device.

It should be understood that FIG. 1 is a simplified diagram of an example for ease of understanding. The communication system may further include more network devices or terminal devices. Embodiments of this application are applicable to any communication scenario in which a transmitter device communicates with a receiver device.

For ease of understanding of embodiments of this application, terms in embodiments of this application are first briefly described below.

### 1. Definition of sensing

Wireless sensing means sensing via wireless signals. Sensing is a process of collecting and processing data, and generating a sensing result. For example, a distance, a shape, a type, and the like of a surrounding obstacle are determined based on the collected data. For another example, a breathing frequency, heartbeats, and the like of a monitored object are determined based on the collected data. The collected data may be data collected via a sensor, or may be data collected via a wireless signal.

Both wireless sensing and wireless communication are based on an electromagnetic wave theory. At a transmitting side, an electromagnetic wave signal is modulated, so that the electromagnetic wave signal carries source information. During propagation, the electromagnetic wave signal is affected by a wireless environment. In other words, the electromagnetic wave signal is affected by the environment, and therefore can also carry environment information. By analyzing the electromagnetic wave signal at a receiving side, not only can the carried source information be obtained, but sensing information reflecting characteristics of the propagation environment can also be extracted. In other words, the electromagnetic wave signal has inherent communication and sensing capabilities, which makes integrated sensing and communication (integrated sensing and communication, ISAC) possible. Integrated sensing and communication may also be referred to as joint communication and sensing (joint communication and sensing, JCAS). Integrated sensing and communication may also be referred to as sensing-communication integration for short. Compared with a system in which sensing and communication are separated, ISAC has various advantages, for example, reducing costs, reducing device sizes, reducing power consumption, improving frequency efficiency, and reducing mutual interference between communication and sensing.

### 2. Sensing scenario

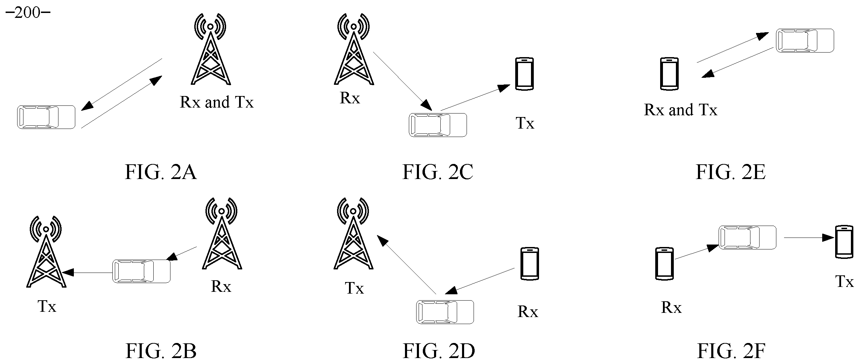

Sensing scenarios may be classified into sensing scenarios based on a network device, sensing scenarios based on a network device and a terminal device, and sensing scenarios based on a terminal device. For example, refer to sensing scenarios shown in FIG. 2A to FIG. 2F. FIG. 2A to FIG. 2F are diagrams of a sensing scenario 200 according to an embodiment of this application.

The sensing scenario shown in FIG. 2A is a sensing scenario based on a network device, and the network device serves as a transmitter and a receiver of a sensing signal. For example, a sensing signal 1 sent by the network device reaches a target object (for example, a vehicle), and the sensing signal 1 is reflected by the target object. The network device may receive a sensing signal 2, and may further process the sensing signal 2 to obtain a sensing result.

The sensing scenario shown in FIG. 2B is also a sensing scenario based on a network device. One network device serves as a transmitter of a sensing signal, and the other network device serves as a receiver of a sensing signal. For example, a sensing signal 1 sent by a network device A reaches a target object, and the sensing signal 1 is reflected by the target object. A network device B may receive a sensing signal 2, and then the network device B may process the sensing signal 2 to obtain a sensing result.

The sensing scenario shown in FIG. 2C is a sensing scenario based on a network device and a terminal device. The network device serves as a transmitter of a sensing signal, and the terminal device serves as a receiver of a sensing signal. For example, a sensing signal 1 sent by the network device reaches a target object, and the sensing signal 1 is reflected by the target object. The terminal device may receive a sensing signal 2, and then the terminal device may process the sensing signal 2 to obtain a sensing result.

The sensing scenario shown in FIG. 2D is also a sensing scenario based on a network device and a terminal device. The terminal device serves as a transmitter of a sensing signal, and the network device serves as a receiver of a sensing signal. For example, a sensing signal 1 sent by the terminal device reaches a target object, and the sensing signal 1 is reflected by the target object. The network device may receive a sensing signal 2, and then the network device may process the sensing signal 2 to obtain a sensing result.

The sensing scenario shown in FIG. 2E is a sensing scenario based on a terminal device, and the terminal device serves as a transmitter and a receiver of a sensing signal. For example, a sensing signal 1 sent by the terminal device reaches a target object, and the sensing signal 1 is reflected by the target object. The terminal device may receive a sensing signal 2, and may further process the sensing signal 2 to obtain a sensing result.

The sensing scenario shown in FIG. 2F is also a sensing scenario based on a terminal device. One terminal device serves as a transmitter of a sensing signal, and the other terminal device serves as a receiver of a sensing signal. For example, a sensing signal 1 sent by a terminal device a reaches a target object, and the sensing signal 1 is reflected by the target object. A terminal device b may receive a sensing signal 2, and then the terminal device b may process the sensing signal 2 to obtain a sensing result.

The sensing signal 2 may be understood as a reflected signal of the sensing signal 1, and the sensing signal 2 carries more information than the sensing signal 1. For example, the sensing signal 2 may carry source information and environment information.

### 3. Sensing entity (sensing entity, SE)

The sensing entity may send and/or receive a sensing signal, and may further send a sensing capability to a sensing control entity or an access management entity. In embodiments of this application, the sensing capability may include one or more of the following capabilities.
(1) A layer 1 (layer 1, L1) sensing capability is used to sense raw data. The raw data is basic information of a sensing signal, for example, one or more of an amplitude, a phase, and whether the sensing signal is an I signal or a Q signal.
(2) A layer 2 (layer 2, L2) sensing capability is used to sense measurement data. The measurement data is data that is obtained by processing raw data and that indicates a measurement dimension, and may include but is not limited to one or more of a delay of a sampling point, a receiving angle of a sensing signal, signal strength of the sensing signal, Doppler (namely, an offset of a frequency of the sensing signal), a location of a target object, a speed of the target object, and the like. Sampling points are signal values that are at some specific moments or locations and that are selected when discretization processing is performed on continuous signals in a signal processing process.
(3) A layer 3 (layer 3, L3) sensing capability is used to process sensing data to obtain a sensing result. The sensing data may be raw data and/or measurement data, and the sensing result may include but is not limited to one or more of a distance between a sensing entity and a target object, a speed of the target object, a location of the target object, an angle between the sensing entity and the target object, a movement path of the target object, a breathing frequency of the target object, heartbeats of the target object, and the like.

The sensing entity is a logical entity, and may also be referred to as a logical sensing entity. The sensing entity may be deployed on a network device or a terminal device. In other words, a network device or a terminal device having a sensing capability may be used as a sensing entity, and the sensing entity may be a network device or a terminal device having a sensing capability. The network device or the terminal device may have the foregoing three capabilities, or may have one capability or several capabilities. For example, some terminal devices with weak computational power have the L1 sensing capability, but do not have the L2 sensing capability or the L3 sensing capability. For another example, some network devices have the foregoing three capabilities. The sensing entity may alternatively be deployed independently.

The sensing entity may include a sensing control entity and a sensing processing entity. The sensing control entity may be configured to implement a control plane function of a sensing service, for example, receive sensing capability information of the sensing entity, and orchestrate a sensing service based on the sensing capability information of the sensing entity. The sensing processing entity may be configured to implement a data plane function of a sensing service, for example, process sensing data of the sensing service, to obtain a sensing result of the sensing service. After the control plane function of the sensing service and the data plane function of the sensing service are deployed independently, a quantity of control plane functional entities and a quantity of data plane functional entities may be flexibly configured and adjusted based on a resource and a service status. Then, attacks on a data plane do not affect a control plane, and vice versa. This improves reliability and security of the sensing service.

Orchestrating the sensing service may include selecting a sending sensing entity and a receiving sensing entity, and the sending sensing entity and the receiving sensing entity may be a same sensing entity. The sending sensing entity is a transmitter of a sensing signal, and is configured to send a sensing signal. The receiving sensing entity is a receiver of a sensing signal, and is configured to receive a sensing signal.

Processing the sensing data may include processing raw data to obtain measurement data, and/or processing measurement data to obtain a sensing result. The measurement data may be obtained by processing the raw data, or may be obtained through sensing by the sensing entity.

The two names of the sensing control entity and the sensing processing entity are used as examples, and do not constitute a limitation on embodiments of this application. With development of communication technologies and sensing technologies, the two modules may use other names. For example, the sensing control entity may also be described as a sensing service control function (sensing service control function, SSCF), a sensing service control network element, a sensing control network element, or the like; and the sensing processing entity may also be described as a sensing data processing function (sensing data processing function, SDPF), a sensing data processing network element, a sensing processing network element, a sensing data function network element, a data function network element, or the like. For ease of description, in the following embodiments, the sensing control entity is described as the SSCF, and the sensing processing entity is described as the SDPF.

In embodiments of this application, an example in which the SSCF and the SDPF are introduced into a core network architecture of a 5G system is used, to better be compatible with the 5G system, so that the 5G system can be smoothly evolved to a 6G system. The SSCF may be mounted to an SBI bus through a service-based interface (service-based interface, SBI) to communicate with another core network functional module. The SDPF may be mounted to the SBI bus through the SBI to communicate with another core network functional module, or may communicate with another core network functional module through a separate interface, for example, communicate with another SDPF through a separate interface, or communicate with the SSCF through a separate interface.

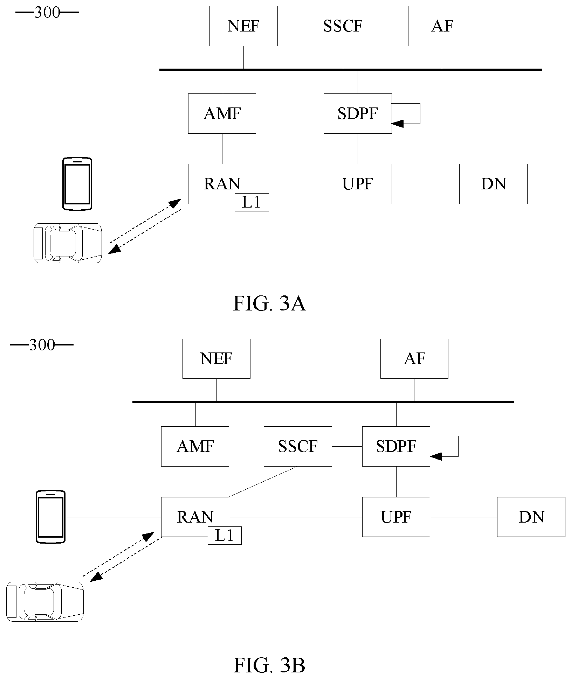

For example, for networking architectures after the SSCF and the SDPF are introduced, refer to FIG. 3A to FIG. 3H.

FIG. 3A to FIG. 3H are diagrams of a networking architecture 300 according to an embodiment of this application. In the networking architecture shown in FIG. 3A, a RAN is connected to the SSCF through an access and mobility management function (access and mobility management function, AMF), the RAN is connected to the SDPF through a user plane function (user plane function, UPF), the SDPF is mounted to an SBI bus through an SBI, and the SSCF is mounted to the SBI bus through an SBI. In this case, the RAN may perform control plane communication with the SSCF through the AMF, and the RAN may perform data plane communication with the SDPF through the UPF.

In the networking architecture shown in FIG. 3B, a RAN is directly connected to the SSCF, the RAN is connected to the SDPF through a UPF, the SDPF is mounted to an SBI bus through an SBI, and the SSCF is not mounted to the SBI bus. In this case, the RAN may directly perform control plane communication with the SSCF, and the RAN may perform data plane communication with the SDPF through the UPF.

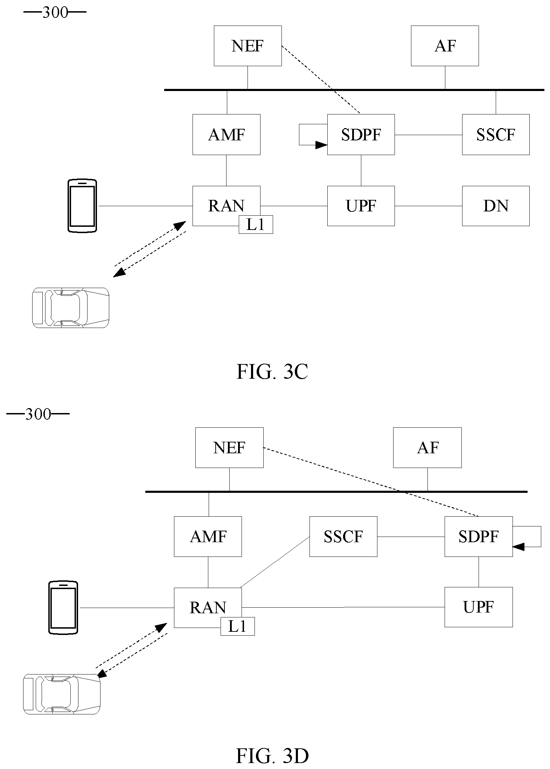

In the networking architecture shown in FIG. 3C, a RAN is connected to the SSCF through an AMF, the RAN is connected to the SDPF through a UPF, the SDPF is not mounted to an SBI bus, and the SSCF is mounted to the SBI bus through an SBI. In this case, the RAN may perform control plane communication with the SSCF through the AMF, and the RAN may perform data plane communication with the SDPF through the UPF.

In the networking architecture shown in FIG. 3D, a RAN is directly connected to the SSCF, the RAN is connected to the SDPF through a UPF, the SDPF is not mounted to an SBI bus, and the SSCF is not mounted to the SBI bus. In this case, the RAN may directly perform control plane communication with the SSCF, and the RAN may perform data plane communication with the SDPF through the UPF.

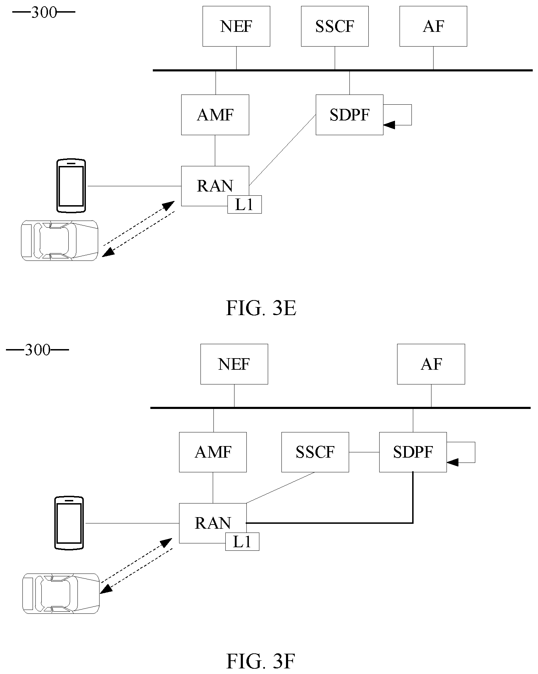

In the networking architecture shown in FIG. 3E, a RAN is connected to the SSCF through an AMF, the RAN is directly connected to the SDPF, the SDPF is mounted to an SBI bus through an SBI, and the SSCF is mounted to the SBI bus through an SBI. In this case, the RAN may perform control plane communication with the SSCF through the AMF, and the RAN may directly perform data plane communication with the SDPF.

In the networking architecture shown in FIG. 3F, a RAN is directly connected to the SSCF, the RAN is directly connected to the SDPF, the SDPF is mounted to an SBI bus through an SBI, and the SSCF is not mounted to the SBI bus. In this case, the RAN may directly perform control plane communication with the SSCF, and the RAN may directly perform data plane communication with the SDPF.

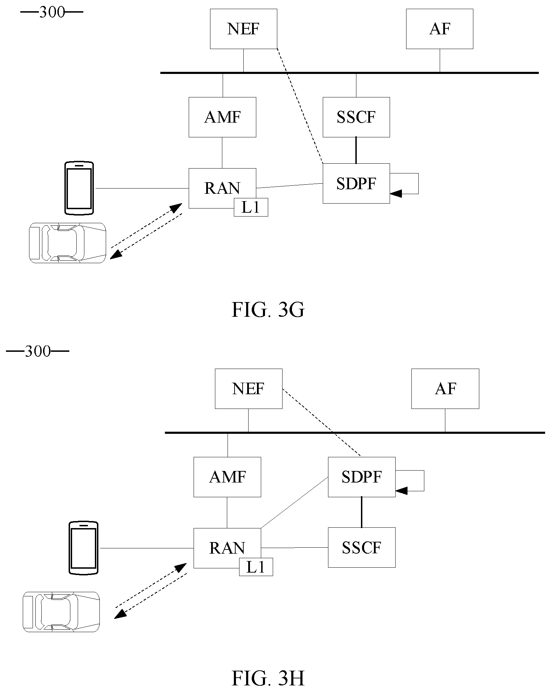

In the networking architecture shown in FIG. 3G, a RAN is connected to the SSCF through an AMF, the RAN is directly connected to the SDPF, the SDPF is not mounted to an SBI bus, and the SSCF is mounted to the SBI bus through an SBI. In this case, the RAN may perform control plane communication with the SSCF through the AMF, and the RAN may directly perform data plane communication with the SDPF.

In the networking architecture shown in FIG. 3H, a RAN is directly connected to the SSCF, the RAN is directly connected to the SDPF, the SDPF is not mounted to an SBI bus, and the SSCF is not mounted to the SBI bus. In this case, the RAN may directly perform control plane communication with the SSCF, and the RAN may directly perform data plane communication with the SDPF.

It can be learned from FIG. 3A to FIG. 3H that: (1) The RAN may directly perform control plane communication with the SSCF, or perform control plane communication with the SSCF through the AMF. (2) The SDPF may be mounted to the SBI bus, or may not be mounted to the SBI bus. (3) The RAN may directly perform data plane communication with the SDPF, or perform data plane communication with the SDPF through the UPF. Control plane communication means transmission of a control plane message, for example, a control message in embodiments of this application. Data plane communication means transmission of sensing data and/or a sensing result.

A subscript L1 of the RAN in FIG. 3A to FIG. 3H indicates that the RAN has an L1 sensing capability. Therefore, the RAN may send a sensing signal to a target object (for example, a bicycle and a car in the figure), and sense raw data based on a sensing signal reflected by the target object. In FIG. 3A to FIG. 3H, an example in which the RAN has an L1 sensing capability is used. During actual application, the RAN may further have an L2 sensing capability, or may further have an L2 sensing capability and an L3 sensing capability. During actual application, UE may also have a sensing capability. For example, the UE has at least one of an L1 sensing capability, an L2 sensing capability, and an L3 sensing capability.

A dashed line between the SDPF and a network exposure function (network exposure function, NEF) in FIG. 3 A to FIG. 3H indicates that the SDPF may or may not communicate with the NEF. If the SDPF is not mounted to the SBI bus, the SDPF may communicate with the NEF through the dashed line. In FIG. 3A to FIG. 3H, an arrow pointing from the SDPF to the SDPF indicates that SDPFs may communicate with each other, for example, transmit sensing data and/or a sensing result.

In embodiments of this application, the AMF is referred to as an access management entity, and the NEF is referred to as a network exposure entity. For ease of description, the AMF and the NEF are used as an example for description in the following embodiments.

Based on the networking architectures shown in FIG. 3A to FIG. 3H, the SSCF and the SDPF may be independently upgraded and maintained without affecting each other, so that a core network functional entity can be flexibly deployed and managed in a network. In FIG. 3A to FIG. 3H, one SSCF and one SDPF are used as an example, and do not constitute a limitation on embodiments of this application. For example, a quantity of SDPFs may be increased or decreased based on an actual requirement. Even if the quantity of SDPFs is decreased, the SSCF is not affected. In this way, the network can be easily expanded or simplified.

By introducing the SSCF and the SDPF, a control plane and a data plane of a sensing service can be separated, so that an attacker cannot attack a control plane entity (for example, the SSCF) through a data plane entity (for example, the SDPF). This helps improve network security. By separating the control plane and the data plane of the sensing service, the control plane entity can respond to a request of the data plane entity more quickly, thereby reducing a network delay and helping improve a network response speed.

Embodiments of this application may be applied to a communication system evolved after 5G, for example, a 5G system or a 6G system, and a wireless communication system such as a satellite communication system or a short-range communication system. The wireless communication system mentioned in embodiments of this application includes but is not limited to a 5G/6G system in three application scenarios, namely, enhanced mobile broadband (enhanced mobile broadband, eMBB), ultra-reliable low-latency communication (ultra-reliable low-latency communication, URLLC), and massive internet of things communications (massive machine-type communications, mMTC), a remote internet of things (long range, LoRa) system, or an internet of vehicles system. Embodiments of this application may be further applied to an ORAN system, a CRAN system, and the like.

The following describes a charging method for a sensing service, and a communication apparatus and system in embodiments of this application with reference to the accompanying drawings.

For ease of understanding and description, the following describes the charging method for the sensing service in embodiments of this application by using interaction between a sensing service control network element and a data function network element as an example. However, this should not constitute any limitation on an execution body of the charging method for the sensing service in embodiments of this application. For example, the method performed by the sensing service control network element may alternatively be performed by a module (for example, a circuit, a chip, or a chip system) of the sensing service control network element, or may be implemented by a logical node, a logical module, or software that can implement all or a part of functions of the sensing service control network element. The method performed by the data function network element may alternatively be performed by a module (for example, a circuit, a chip, or a chip system) of the second network element, or may be implemented by a logical node, a logical module, or software that can implement all or a part of functions of the data function network element.

The network element may alternatively be a concept such as an entity, for example, a sensing service control entity and a data functional entity.

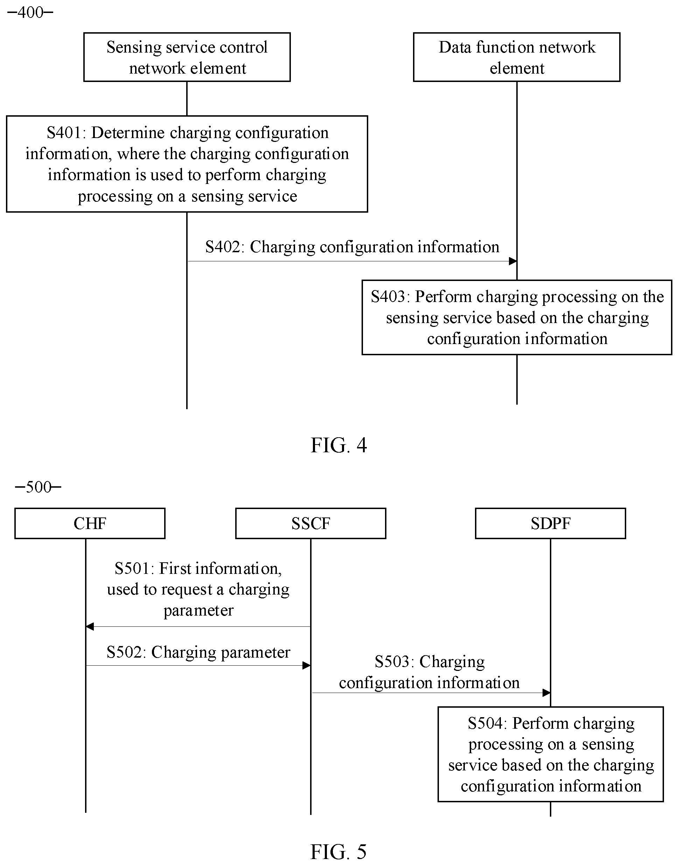

FIG. 4 is an interaction flowchart of a charging method 400 of a sensing service according to an embodiment of this application. As shown in FIG. 4, the method includes the following steps.

S401: A sensing service control network element determines charging configuration information.

The charging configuration information can be used to perform charging processing on the sensing service. The sensing service may be a service required to be performed by a sensing service user. For example, the sensing service may include one or more of a positioning sensing service, a speed sensing service, an imaging sensing service, and the like. The sensing service may alternatively be a service present in the six scenarios shown in FIG. 2A to FIG. 2F. This is not limited herein.

There may be various forms of the sensing service user. For example, the sensing service user may be a terminal, or the sensing service user may be an application or software in the terminal. This is not limited herein. In conclusion, the sensing service user may be a user who requires to perform the sensing service.

The charging configuration information may alternatively be charging function information, charging configuration information of the sensing service, charging function information of the sensing service, or the like.
✧ For example, when the charging configuration information is charging configuration information of the sensing service, the charging configuration information of the sensing service is used to perform charging processing on the sensing service.
✧ For example, when the charging configuration information is charging function information of the sensing service, the charging function information of the sensing service is used to perform charging processing on the sensing service.
✧ For example, when the charging configuration information is charging function information, the charging function information is used to perform charging processing on the sensing service.

In conclusion, the term "charging configuration information" is merely an example, and a term name having a similar or same meaning may be used in a future standard.

The charging configuration information may include one or both of a charging policy or a charging parameter.

For example, when the charging configuration information includes a charging policy, the charging policy indicates a policy used when charging is performed on the sensing service.

For another example, when the charging configuration information includes a charging parameter, the charging parameter indicates a parameter used when charging is performed on the sensing service.

For another example, when the charging configuration information includes a charging policy and a charging parameter, the charging policy and the charging parameter respectively indicate a policy and a parameter used when charging is performed on the sensing service.

Based on the charging policy and/or the charging parameter, charging processing performed on the sensing service can be supported in embodiments of this application.

In a possible implementation, the charging policy includes one or both of a charging granularity or a charging manner.

Based on the charging granularity and/or the charging manner, a data function network element may complete statistical collection processing on the sensing service; and based on information obtained through statistical collection processing, charging processing performed on the sensing service may be supported in embodiments of this application.

When the charging policy includes a charging granularity, the charging granularity may include one or both of service-based charging or quality of service (quality of service, QoS)-based charging.
✧ When the charging granularity includes service-based charging, differentiated charging is performed on different sensing services. For example, charging is performed on a sensing service 1 at a rate 1, charging is performed on a sensing service 2 at a rate 2, a type of the sensing service 1 is different from a type of the sensing service 2, and the rate 1 may be different from the rate 2.
✧ When the charging granularity includes QoS-based charging, differentiated charging may be performed on services or flows that implement different QoSs. For example, charging is performed on a service or flow that implements a QoS 1 at a rate 3, charging is performed on a service or flow that implements a QoS 2 at a rate 4, the QoS 1 is different from the QoS 2, and the rate 3 is different from the rate 4.
✧ When the charging granularity includes service-based charging and QoS-based charging, charging may be performed on the sensing service based on both service-based charging and QoS-based charging.

When the charging granularity is service-based charging, the data function network element may perform statistical collection on a type of the sensing service performed by the sensing service user, and obtain the corresponding charging information, so that charging processing performed on the sensing service can be supported.

When the charging granularity is quality of service flow-based charging, the data function network element may perform statistical collection on a quality of service flow of the sensing service performed by the sensing service user, and obtain the corresponding charging information, so that charging processing performed on the sensing service can be supported.

When the charging granularity is service-based charging and quality of service flow-based charging, the data function network element may perform statistical collection on a quality of service flow and a type of the sensing service performed by the sensing service user, and obtain the corresponding charging information, so that charging processing performed on the sensing service can be supported.

When the charging policy includes a charging manner, the charging manner may include one or both of online charging or offline charging.
✧ When the charging manner includes online charging, an account balance of the sensing service user is monitored online or in real time. When the account balance of the user is used up, a system may control, in real time, the sensing service user to stop using the sensing service.
✧ When the charging manner includes offline charging, an account balance of the sensing service user is updated at specified time or periodically. When the account balance of the user is used up, a system may control the sensing service user to stop using the sensing service.
✧ When the charging manner includes online charging and offline charging, charging may be performed in an online charging manner in a first time period, and charging may be performed in an offline charging manner at specified time in a second time period.

When the charging manner is online charging, the data function network element may obtain the charging information of the sensing service in real time. This helps monitor the account balance of the sensing service user in real time, and stop the sensing service user from continuing to use the sensing service in time when the account balance of the sensing service user is used up.

Optionally, in embodiments of this application, when the account balance of the sensing service user reaches a proportion or a threshold, the sensing service user may be reminded to make a payment. In this way, the sensing service user may make a payment in time.

When the charging manner is offline charging, the data function network element may obtain the charging information of the sensing service at specified time. This helps reduce signaling exchange overheads of the data function network element. For example, the data function network element does not need to frequently report the charging information of the sensing service and the like to the sensing service control network element.

For example, the charging parameter includes one or more of a charging mode, a charging event, a first charging quota, or a threshold of the charging event.
✧ When the charging parameter includes a charging mode, the charging mode indicates a mode used when charging is performed on the sensing service.
✧ When the charging parameter includes a charging event, the charging event indicates a condition for reporting the charging information of the sensing service.
✧ When the charging parameter includes a first charging quota, the first charging quota indicates a charging quota of the sensing service.

When the charging parameter includes a charging mode, the data function network element may determine a mode for charging the sensing service.

When the charging parameter includes a charging event, the data function network element may determine a condition for reporting the charging information of the sensing service to the sensing service control network element.

When the charging parameter includes a first charging quota, the data function network element may determine an initial quota configured when the sensing service user performs the sensing service. The first charging quota is delivered to control a quantity of charging data records and a quantity of pieces of information that is sent by the data function network element to the sensing service control network element, thereby reducing signaling exchange overheads. In addition, impact on load of a charging function network element may be further reduced.

When the charging parameter includes a threshold of the charging event, the data function network element may determine a specific condition for reporting the charging information of the sensing service to the sensing service control network element.

In a possible implementation, the charging mode includes one or more of traffic-based charging, duration-based charging, service occurrence time point-based charging, service occurrence area-based charging, service type-based charging, service sensing precision-based charging, or service occurrence count-based charging.
✧ For example, when the charging mode includes traffic-based charging, statistical collection may be performed on traffic used when the sensing service user performs the sensing service and charging is performed on the sensing service based on the traffic.
✧ For example, when the charging mode includes duration-based charging, statistical collection may be performed on duration required when the sensing service user performs the sensing service and charging is performed on the sensing service based on the duration.
✧ For example, when the charging mode includes service occurrence time point-based charging, statistical collection may be performed on a time point at which the sensing service user performs the sensing service, and charging is performed on the sensing service based on the time point. For example, the time point at which the sensing service user performs the sensing service is 10:00, and a rate 1 is used to charge the sensing service performed by the sensing service user between 00:00 and 12:00; the time point at which the sensing service user performs the sensing service is 15:00, and a rate 2 is used to charge the sensing service performed by the sensing service user between 12:00 and 17:00; and the time point at which the sensing service user performs the sensing service is 22:00, and a rate 3 is used to charge the sensing service performed by the sensing service user between 17:00 and 24:00.
   ■ Optionally, when the sensing service user starts the sensing service at 10:00 and ends the sensing service at 15:00, a rate 1 may be used to charge the sensing service used by the sensing service user in a period from 10:00 to 12:00, and a rate 2 may be used to charge the sensing service used by the sensing service user in a period from 12:00 to 15:00. When service occurrence time reaches 12:00, reporting the charging event may be triggered.
✧ For example, when the charging mode includes service occurrence count-based charging, statistical collection may be performed on a count when the sensing service user performs the sensing service, and charging is performed on the sensing service based on the count.
✧ For example, when the charging mode includes service occurrence area-based charging, an area in which the sensing service user performs the sensing service may be determined, and charging is performed on the sensing service based on the area. For example, when the sensing service user performs the sensing service in an area 1, a rate 1 may be used to charge the sensing service; or when the sensing service user performs the sensing service in an area 2, a rate 2 may be used to charge the sensing service.
✧ For example, when the charging mode includes service type-based charging, charging may be performed on different types of sensing services. For example, when the sensing service user performs a sensing service 1, a rate 1 is used to charge the sensing service 1; or when the sensing service user performs a sensing service 2, a rate 2 is used to charge the sensing service 2. A type of the sensing service 1 is different from a type of the sensing service 2.
✧ For example, when the charging mode includes service sensing precision-based charging, charging may be performed on different sensing precisions. For example, when a sensing precision used when the sensing service user performs a sensing service 1 is a sensing precision 1, a rate 1 may be used to charge the sensing service 1; or when a sensing precision used when the sensing service user performs a sensing service 1 is a sensing precision 2, a rate 2 may be used to charge the sensing service 1. The sensing precision may include one or more of the following: a positioning precision, a speed estimation precision, an imaging precision, a missing detection rule, a false alarm probability, sensing resolution, a delay, and the like.

Based on one or more of the foregoing charging parameters, completing charging processing performed on the sensing service can be supported in embodiments of this application. For example, the data function network element may determine specific content that requires statistical collection when the sensing service user performs the sensing service.

In a possible implementation, the charging event includes one or more of the following: traffic reaching a threshold, duration reaching a threshold, a change of a service occurrence time point, or a service occurrence count reaching a threshold.
✧ For example, when the charging event includes traffic reaching a threshold, traffic information (which may be one of the charging information of the sensing service) when the sensing service user performs the sensing service may be reported. For example, a traffic threshold is 80 MB. When traffic used when the sensing service user performs the sensing service reaches 80 MB, the traffic information when the sensing service user performs the sensing service may be reported to another network element, and the another network element charges the sensing service based on the traffic information.
✧ For example, when the charging event includes duration reaching a threshold, duration information (which may be one of the charging information of the sensing service) when the sensing service user performs the sensing service may be reported. For example, a duration threshold is 80 hours. When duration required when the sensing service user performs the sensing service reaches 80 hours, the duration information when the sensing service user performs the sensing service may be reported to another network element, and the another network element charges the sensing service based on the duration information.
✧ For example, when the charging event includes a change of a service occurrence time point, time information (which may be one of the charging information of the sensing service) when the sensing service user performs the sensing service may be reported. For example, a service occurrence time point is 13:00. When a time point at which the sensing service user performs the sensing service has passed 12:00, the time information when the sensing service user performs the sensing service may be reported to another network element, and the another network element charges the sensing service based on the time information. For example, when the sensing service user starts the sensing service at 10:00 and ends the sensing service at 15:00 and when service occurrence time reaches 12:00, reporting the charging event may be triggered.
   > Optionally, when the charging event includes a change of a service occurrence time point, the charging event may further include time at which the service ends. For example, when the sensing service user performs the sensing service, service occurrence time is 17:00, and service end time is 23:00, the sensing service may be charged based on the service occurrence time and the service end time.
✧ For example, when the charging event includes a service occurrence count reaching a threshold, occurrence count information (which may be one of the charging information of the sensing service) when the sensing service user performs the sensing service may be reported. For example, a threshold of a service occurrence count is 50. When a service occurrence count when the sensing service user performs the sensing service reaches 50, service occurrence count information when the sensing service user performs the sensing service may be reported to another network element, and the another network element charges the sensing service based on the service occurrence count information.

Based on one or more of the foregoing charging events, charging processing performed on the sensing service can be supported in embodiments of this application. For example, the data function network element may determine a condition for reporting the charging information to the sensing service control network element.

When the charging parameter includes a first charging quota, the first charging quota may be one or more of a duration quota, a traffic quota, or a service occurrence count quota.
✧ For example, the first charging quota is a duration quota. When duration required when the sensing service user performs the sensing service does not reach the quota or a fixed ratio (for example, 80%) of the quota, the data function network element does not need to report charging information of the sensing service user. When duration required when the sensing service user performs the sensing service reaches the quota or a fixed ratio (for example, 80%) of the quota, the data function network element reports charging information of the sensing service user.
✧ For example, the first charging quota is a traffic quota. When traffic used when the sensing service user performs the sensing service does not reach the quota or a fixed ratio (for example, 80%) of the quota, the data function network element does not need to report charging information of the sensing service user. When traffic used when the sensing service user performs the sensing service reaches the quota or a fixed ratio (for example, 80%) of the quota, the data function network element reports charging information of the sensing service user.
✧ For example, the first charging quota is a service occurrence count quota. When a service occurrence count required when the sensing service user performs the sensing service does not reach the quota or a fixed ratio (for example, 80%) of the quota, the data function network element does not need to report charging information of the sensing service user. When a service occurrence count required when the sensing service user performs the sensing service reaches the quota or a fixed ratio (for example, 80%) of the quota, the data function network element reports charging information of the sensing service user.

The first charging quota is delivered to control a quantity of charging data records and a quantity of pieces of information that is sent by the data function network element to the sensing service control network element, thereby reducing signaling exchange overheads. In addition, impact on load of a charging function network element may be further reduced. In addition, it is also convenient for the charging function network element to perform reconciliation on the sensing service.

In embodiments of this application, for a description of the charging information of the sensing service user, refer to Table 1. Content described in Table 1 is merely used as an example, and is not intended as a final limitation.

**Table 1**

| Field | Meaning |
|---|---|
| URR ID | Identifies a reported URR. |
| start time | Start time |
| end time | End time |
| volume usage | Traffic |
| duration | Duration |
| events usage | Service occurrence count |
| location | Service occurrence area |

As shown in Table 1, the charging information includes at least one of the following:
- URR ID field: indicates an identifier of a usage reporting rule (usage reporting rule, URR).
- start time field: indicates start time at which the sensing service user performs the sensing service.
- end time field: indicates end time at which the sensing service user performs the sensing service.
- volume usage field: indicates a traffic usage condition when the sensing service user performs the sensing service.
- duration field: indicates a duration usage condition when the sensing service user performs the sensing service.
- events usage field: indicates a service occurrence count when the sensing service user performs the sensing service.
- location field: indicates an area in which the sensing service user performs the sensing service.

During specific application, a part or all of the parameters in Table 1 may be selected.

It should be noted that the URR may be understood as a charging group. For example, services with a same rate and a same statistical collection mode belong to one charging group. For example, if a rate of a service 1 is the same as a rate of a service 2 and both the services are charged by traffic, the service 1 and the service 2 may belong to a same charging group. The data function network element may accumulate traffic of the service 1 and the service 2, and report charging information of the service 1 and the service 2 when the traffic reaches a threshold.

Based on the foregoing charging information, charging processing performed on the sensing service can be supported in embodiments of this application.

In a possible implementation, the threshold of the charging event may include one or more of a traffic threshold, a duration threshold, or a service occurrence count threshold.
✧ For example, when the threshold of the charging event includes a traffic threshold, the traffic threshold may be a fixed ratio of the first charging quota. For example, the first charging quota is 100 MB, the fixed ratio of the charging quota is 80%, and the traffic threshold may be 80 MB.
✧ For example, when the threshold of the charging event includes a duration threshold, the duration threshold may be a fixed ratio of the first charging quota. For example, the first charging quota is 100 hours, the fixed ratio of the charging quota is 80%, and the duration threshold may be 80 hours.
✧ For example, when the threshold of the charging event includes a service occurrence count threshold, the duration threshold may be a fixed ratio of the first charging quota. For example, the first charging quota is 100 times, the fixed ratio of the charging quota is 80%, and the service occurrence count threshold may be 80 times.

Based on one or more of the foregoing thresholds of the charging event, charging processing performed on the sensing service can be supported in embodiments of this application. For example, the data function network element may determine a specific condition for reporting the charging information to the sensing service control network element.

For a description of the charging parameter, refer to Table 2. Content described in Table 2 is merely used as an example, and is not intended as a final limitation.

**Table 2**

| Field | Meaning |
|---|---|
| URR ID | Identifier of a URR |
| charging mode | Charging mode |
| charging trigger | Charging event |
| volume threshold | Traffic threshold |
| time threshold | Duration threshold |
| event threshold | Service occurrence count threshold |

As shown in Table 2, the charging parameter includes at least one of the following:
- URR ID field: indicates an identifier of a usage reporting rule.
- charging mode field: indicates a charging mode.
- charging trigger field: indicates a charging event.
- volume threshold field: indicates a traffic threshold.
- time threshold field: indicates a duration threshold.
- event threshold field: indicates a service occurrence count threshold.

Based on one or more of the foregoing charging parameters, charging processing performed on the sensing service can be supported in embodiments of this application.

During specific application, a part or all of the parameters in Table 2 may be selected.

When the charging parameter includes a charging mode, the data function network element may determine a mode for charging the sensing service.

When the charging parameter includes a charging event, the data function network element may determine a condition for reporting the charging information of the sensing service to the sensing service control network element.

When the charging parameter includes a first charging quota, the data function network element may determine an initial quota configured when the sensing service user performs the sensing service. In addition, the first charging quota is delivered to control a quantity of charging data records and a quantity of pieces of information that is sent by the data function network element to the sensing service control network element, thereby reducing signaling exchange overheads. In addition, load of the charging function network element may be further reduced.

When the charging parameter includes a threshold of the charging event, the data function network element may determine a specific condition for reporting the charging information of the sensing service to the sensing service control network element.

S402: The sensing service control network element sends the charging configuration information to the data function network element.

Correspondingly, the data function network element receives the charging configuration information from the sensing service control network element.

S403: The data function network element performs charging processing on the sensing service based on the charging configuration information.

The data function network element may obtain sensing data when the sensing service user performs the sensing service to perform charging processing.

For example, the data function network element performs statistical collection on a traffic volume of the sensing service based on the charging granularity, for example, performs statistical collection on duration, traffic, or a service occurrence count of the sensing service, and obtains charging information corresponding to the sensing service. When it is determined that the condition for reporting the charging information of the sensing service is met, for example, after the data function network element performs statistical collection on the traffic volume of the sensing service, it is determined that the traffic of the sensing service has reached the traffic threshold, and the data function network element may report the charging information of the sensing service to the sensing service control network element.

According to the foregoing technical solution, the data function network element may perform, based on the charging configuration information, charging processing on the sensing service performed by the sensing service user, so that charging processing performed on the sensing service can be supported. In addition, the data function network element is deployed, so that overall duration required for performing charging processing on the sensing service can be shortened in embodiments of this application. For example, the data function network element performs, based on the charging configuration information, statistical collection processing on obtained sensing data of the sensing service to obtain corresponding charging information, and feeds back the charging information. A network element responsible for a charging function directly performs charging processing on the sensing service based on the charging information.

The following further describes the method in FIG. 4 with reference to FIG. 5 to FIG. 8. For ease of understanding and description, the following uses an example in which an SSCF is the sensing service control network element and an SDPF is the data function network element for description.

FIG. 5 is an interaction flowchart of a charging method 500 of a sensing service according to an embodiment of this application. As shown in FIG. 5, the method includes the following steps.

S501: The SSCF sends first information to a charging function (charge function, CHF) network element.

Correspondingly, the CHF receives the first information. The first information is used to request a charging parameter.

When determining that charging processing needs to be performed on the sensing service, the SSCF may send the first information used to request the charging parameter to the CHF. The CHF may send the charging parameter to the SSCF based on the first information.

Optionally, the first information may further carry indication information of "a charging policy corresponding to a specific service". For example, for a positioning sensing service, the SSCF may obtain a charging parameter of the positioning sensing service from the CHF based on the first information (for example, the first information includes indication information indicating the positioning sensing service); and for a speed sensing service, the SSCF may obtain a charging parameter of the speed sensing service from the CHF based on the first information (for example, the first information includes indication information indicating the speed sensing service). In this way, the charging parameter may be obtained in a targeted manner, so that charging processing performed on the sensing service used by a sensing service user can be supported.

Optionally, when the SSCF obtains the charging parameter from the CHF, the SSCF may request to obtain a predefined charging parameter of the sensing service. In this way, the SSCF does not need to indicate type information of the sensing service used by the sensing service user to the CHF.

The first information may alternatively be replaced with another term, for example, may be replaced with charging parameter request information or request information. This is not limited herein. In conclusion, the term "first information" is merely an example, and a term name having a similar or same meaning may be used in a future standard.

S502: The CHF sends the charging parameter to the SSCF.

Correspondingly, the SSCF receives the charging parameter from the CHF.

S503: The SSCF sends charging configuration information to the SDPF.

Correspondingly, the SDPF receives the charging configuration information from the SSCF.

The charging policy may be predefined or preconfigured. The SSCF may determine the charging policy by itself.

For example, a correspondence between the charging parameter and the charging policy may be established, and the correspondence is configured in the SSCF. After obtaining the charging parameter from the CHF, the SSCF may determine, based on the correspondence and the obtained charging parameter, the corresponding charging policy.

Optionally, a plurality of charging policies may be preconfigured, and the SSCF selects one charging policy from the plurality of charging policies.

After determining the charging policy, the SSCF may send the charging policy and the charging parameter to the SDPF.

S504: The SDPF performs charging processing on the sensing service based on the charging configuration information.

For a description of S504, refer to the description of S403. Details are not described again.

According to the foregoing solution, the sensing service control network element may obtain the charging parameter from the charging function network element. In this way, the charging parameter may be obtained.

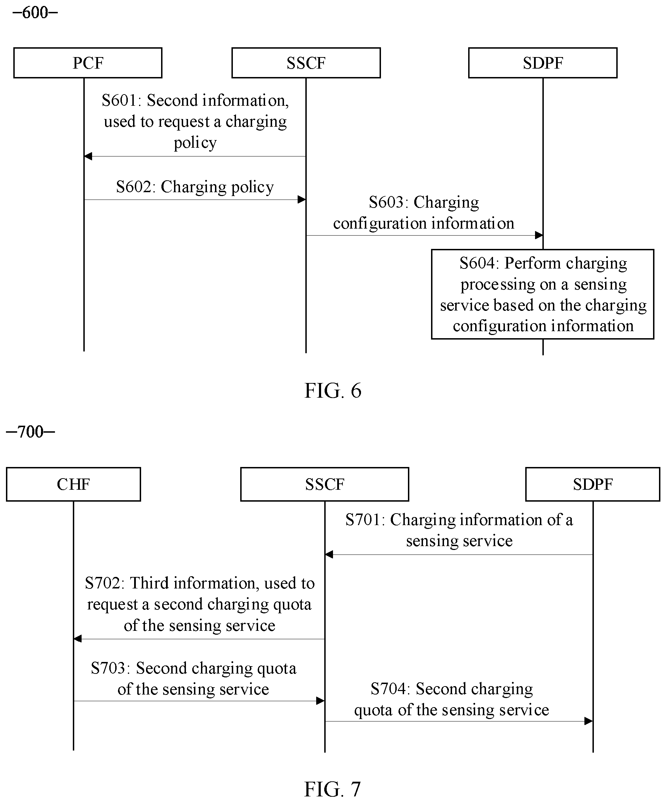

FIG. 5 is described by using an example in which the SSCF obtains the charging parameter from the CHF and the charging policy is predefined or preconfigured. However, the charging parameter may alternatively be predefined or preconfigured. For details, refer to FIG. 6.

FIG. 6 is an interaction flowchart of a charging method 600 of a sensing service according to an embodiment of this application. As shown in FIG. 6, the method includes the following steps.

S601: The SSCF sends second information to a policy control (policy control function, PCF) network element.

Correspondingly, the PCF receives the second information. The second information is used to request a charging policy.

When determining that charging processing needs to be performed on the sensing service, the SSCF may send the second information used to request the charging policy to the PCF. The PCF may determine, based on the second information, the charging policy that needs to be sent to the SSCF. Alternatively, before performing charging processing on the sensing service, the SSCF sends the second information used to request the charging policy to the PCF. The PCF may determine, based on the second information, the charging policy that needs to be sent to the SSCF.

Optionally, the second information may further carry indication information of "a charging policy corresponding to a specific service". For example, for a positioning sensing service, the SSCF may obtain a charging policy of the positioning sensing service from the PCF based on the second information (for example, the second information includes indication information indicating the positioning sensing service); and for a speed sensing service, the SSCF may obtain a charging policy of the speed sensing service from the PCF based on the second information (for example, the second information includes indication information indicating the speed sensing service). In this way, the charging policy may be obtained in a targeted manner, so that charging processing performed on the sensing service used by a sensing service user can be supported.

Optionally, when the SSCF obtains the charging policy from the PCF, the SSCF may request to obtain a predefined charging policy of the sensing service. In this way, the SSCF does not need to indicate type information of the sensing service used by the sensing service user to the PCF.

The second information may alternatively be replaced with another term, for example, may be replaced with charging policy request information or request information. This is not limited herein. In conclusion, the term "second information" is merely an example, and a term name having a similar or same meaning may be used in a future standard.

S602: The PCF sends the charging policy to the SSCF.

Correspondingly, the SSCF receives the charging policy from the PCF.

S603: The SSCF sends charging configuration information to the SDPF.

Correspondingly, the SDPF receives the charging configuration information from the SSCF.

A charging parameter may be predefined or preconfigured. Therefore, the SSCF may determine the charging parameter by itself.

For example, a correspondence between the charging parameter and the charging policy may be established, and the correspondence is configured in the SSCF. After obtaining the charging policy from the PCF, the SSCF may determine, based on the correspondence and the obtained charging policy, the corresponding charging parameter.

Optionally, a plurality of charging parameters may be preconfigured, and the SSCF selects one charging parameter from the plurality of charging parameters.

After determining the charging parameter, the SSCF may send the charging policy and the charging parameter to the SDPF.

S604: The SDPF performs charging processing on the sensing service based on the charging configuration information.

For a description of S604, refer to the description of S403. Details are not described again.

According to the foregoing solution, the sensing service control network element may obtain the charging policy from the policy control network element. In this way, the charging policy may be obtained.

FIG. 5 and FIG. 6 are described by using examples in which the SSCF separately obtains the charging parameter and the charging policy from the CHF or the PCF. In embodiments of this application, a scenario in which both the charging policy and the charging parameter are predefined or preconfigured is also supported. The SSCF may select one charging policy from one or more preconfigured charging policies and one charging parameter from one or more preconfigured charging parameters, and send the determined charging policy and the determined charging parameter to the SDPF. In this way, signaling exchange overheads for obtaining the charging parameter and/or the charging policy by the SSCF can be reduced.

FIG. 4 to FIG. 6 are described by using examples in which the SSCF sends the charging configuration information to the SDPF and the SDPF performs charging processing on the sensing service based on the charging configuration information. After completing charging processing on the sensing service, the SDPF may further interact with the SSCF. For details, refer to FIG. 7.

FIG. 7 is an interaction flowchart of a charging method 700 of a sensing service according to an embodiment of this application. As shown in FIG. 7, the method includes the following steps.

S701: The SDPF sends charging information of the sensing service to the SSCF.

Correspondingly, the SSCF receives the charging information of the sensing service from the SDPF.

For a description of the charging information of the sensing service, refer to the description of S403. Details are not described again.

S702: The SSCF sends third information to the CHF.

Correspondingly, the CHF receives the third information. The third information is used to request a second charging quota of the sensing service.

The SDPF may obtain the charging information of the sensing service in real time when determining that a charging manner is online charging, and may send the charging information of the sensing service to the SSCF when determining that a requirement for reporting the charging information of the sensing service is met.

The SDPF may obtain the charging information of the sensing service at specified time when determining that a charging manner is offline charging, and may send the charging information of the sensing service to the SSCF when determining that a requirement for reporting the charging information of the sensing service is met.

When determining that an account balance of a sensing service user is not used up, the SSCF may send the third information used to request the second charging quota of the sensing service to the CHF. In this way, the SDPF can determine, based on the new charging quota, whether the charging information of the sensing service needs to be reported.

The third information may alternatively be replaced with another term, for example, may be replaced with charging quota request information or request information. This is not limited herein. In conclusion, the term "third information" is merely an example, and a term name having a similar or same meaning may be used in a future standard.

S703: The CHF sends the second charging quota of the sensing service to the SSCF.

Correspondingly, the SSCF receives the second charging quota of the sensing service.

S704: The SSCF sends the second charging quota of the sensing service to the SDPF.

Correspondingly, the SDPF receives the second charging quota of the sensing service.

After receiving the second charging quota, the SDPF may determine a new charging event threshold, and may determine, based on the new charging event threshold, whether the charging information of the sensing service needs to be reported.

Optionally, the second charging quota may be the same as a first charging quota, or may be different from a first charging quota. This is not limited.

According to the foregoing solution, in this embodiment of this application, the SDPF may be supported in determining the second charging quota of the sensing service. In addition, the second charging quota of the sensing service is exchanged, so that the charging function network element may check the account balance of the sensing service user based on the third information. This may avoid an economic loss caused because the sensing service user continues to use the sensing service when the charging quota is used up.

It should be noted that the second charging quota may be delivered cyclically until the account balance of the sensing service user is used up.

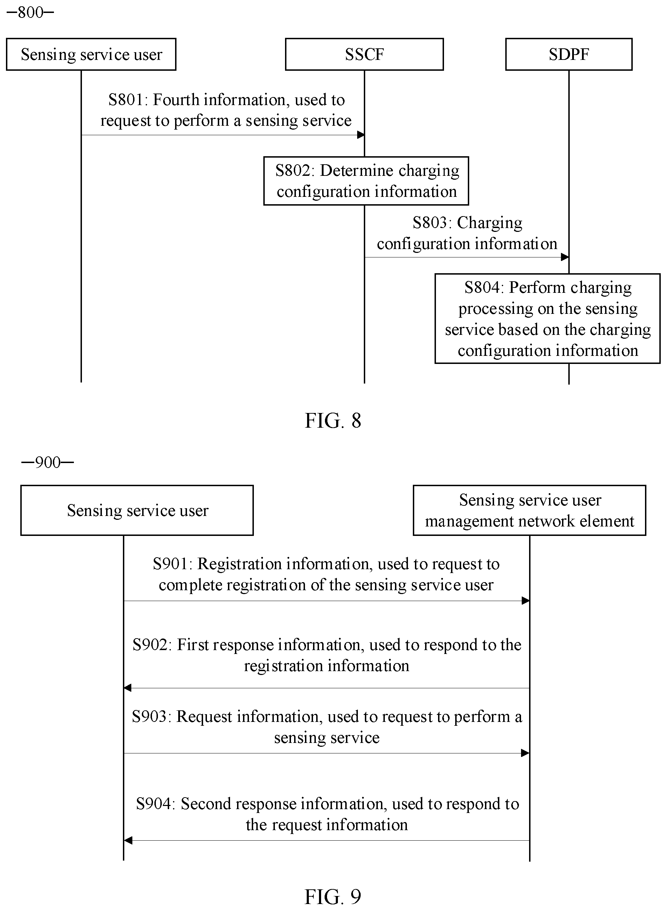

FIG. 4 to FIG. 7 are described by using examples in which the SSCF and the SDPF exchange the charging configuration information and the charging information of the sensing service. The SSCF may alternatively exchange information with another network element, to start or perform a procedure of sending the charging configuration information to the SDPF. For details, refer to FIG. 8.

FIG. 8 is an interaction flowchart of a charging method 800 of a sensing service according to an embodiment of this application. As shown in FIG. 8, the method includes the following steps.

S801: A sensing service user sends fourth information to the SSCF.

Correspondingly, the SSCF receives the fourth information. The fourth information is used to request the sensing service.

The SSCF may determine, based on the fourth information, that charging processing needs to be performed on the sensing service, and may start to perform the following procedure.

The fourth information may alternatively be replaced with another term, for example, replaced with sensing service request information or request information. This is not limited. In conclusion, the term "fourth information" is merely an example, and a term name having a similar or same meaning may be used in a future standard.

S802: The SSCF determines charging configuration information.

For a description of S802, refer to the description of S401. Details are not described again.

S803: The SSCF sends the charging configuration information to the SDPF.

Correspondingly, the SDPF receives the charging configuration information.

S804: The SDPF performs charging processing on the sensing service based on the charging configuration information.

For a description of S804, refer to the description of S404. Details are not described again.

According to the technical solution in FIG. 8, the SSCF may determine the charging configuration information based on the information that is sent by the sensing service user and that is used to request the sensing service, and complete a process of exchanging the charging configuration information with the SDPF, so that charging processing performed on the sensing service can be supported.

The content in FIG. 4 to FIG. 8 is described by using examples in which a plurality of network elements exchange information to complete charging processing on the sensing service. The following describes how to complete registration of a sensing service user with reference to FIG. 9.

FIG. 9 is an interaction flowchart of a charging method 900 of a sensing service according to an embodiment of this application. As shown in FIG. 9, the method includes the following steps.

S901: The sensing service user sends registration information to a sensing service user management network element.

Correspondingly, the sensing service user management network element receives the registration information.

The sensing service user management network element is configured to manage the sensing service user, and may be responsible for one or more of the following:
- account opening and closing of the sensing service user;
- subscription to the sensing service;
- authentication and authorization of the sensing service user; and
- account balance management of the sensing service user. In addition, the registration information is used to request to complete registration of the sensing service user. For a description of the registration information, refer to Table 3. Content described in Table 3 is merely used as an example, and is not intended as a final limitation.

**Table 3**

| Field | Meaning |
|---|---|
| User name | Name of the sensing service user |
| User identifier | Unique identifier of the sensing service user |
| User type | Internal user and external user |
| Authentication data | For example, a user password |
| Request-allowed sensing service type | List of sensing service types supported by the user |
| Service-prohibited area | Indicates an area in which the user is prohibited from performing the sensing service |
| User priority | Identifies a user priority. A value ranges from 1 to 15. |
| Charging attribute | Including postpaid, prepaid, and free users |
| Service subscription information | Related information of the subscribed sensing service |

As shown in Table 3, the registration information may include at least one of the following:
- User name field: indicates a name of the sensing service user.
- User identifier field: indicates an identifier (which is a unique identifier) of the sensing service user.
- User type field: indicates whether the sensing service user is an internal user or an external user.
- Authentication data field: indicates a user password and the like of the sensing service user, to authenticate an identity of the sensing service user.
- Request-allowed sensing service type field: indicates a list of sensing service types supported by the sensing service user.
- Service-prohibited area field: indicates an area in which the sensing service user is prohibited from performing the sensing service, and may be a cell identifier or a location identifier.
- User priority field: identifies a priority of the sensing service user. A value may range from 1 to 15. A smaller value indicates a higher priority.
- Charging attribute field: indicates a charging attribute of the sensing service user, including postpaid, prepaid, a free user, and the like.
- Service subscription information field: indicates related information of the subscribed sensing service, for example, a service type, time, duration, and a sensing precision.

Based on the foregoing registration information, completing registration management of the sensing service user may be supported in this embodiment of this application.

In a possible implementation, the registration information includes a name of the sensing service user, an identifier of the sensing service user, a user type of the sensing service user, authentication data of the sensing service user, and a charging attribute. Based on one or more of the foregoing items, the sensing service user management network element may obtain related information of the sensing service user, and can complete registration management of the sensing service user based on the related information.

In a possible implementation, the registration information further includes at least one of the following: a request-allowed sensing service type, a service-prohibited area, a user priority, or service subscription information. Based on one or more of the foregoing items, the sensing service user management network element may further complete registration management of the sensing service user.

S902: The sensing service user management network element sends first response information to the sensing service user.

Correspondingly, the sensing service user receives the first response information. The first response information is used to respond to the registration information. For example, the first response information indicates that the sensing service user is successfully registered, or the first response information indicates that the sensing service user fails to be registered.

According to the method, completing a registration procedure for the sensing service user may be supported in embodiments of this application.

S903: The sensing service user sends request information of the sensing service to the sensing service user management network element.

Correspondingly, the sensing service user management network element receives the request information of the sensing service, where the request information is used to request the sensing service.

S904: The sensing service user management network element sends second response information to the sensing service user.

Correspondingly, the sensing service user receives the second response information. The second response information is used to respond to the request information of the sensing service. For example, the second response information indicates that the sensing service user is allowed to perform the sensing service, or the second response information indicates that the sensing service user is not allowed to perform the sensing service.

When the sensing service user management network element allows the sensing service user to perform the sensing service, the sensing service user management network element may determine parameters such as a type and an area of the sensing service.

According to the method in FIG. 9, the sensing service user may be supported in requesting to perform or use the sensing service in this embodiment of this application.

The sensing service user management network element may alternatively exchange information about the sensing service user with another network element. For example, the sensing service user management network element exchanges initialization information of charging information of the sensing service user with a CHF or an account balance management function (account balance management function, ABMF) network element.

After the sensing service user completes the registration procedure and completes the request of performing the sensing service, the SSCF, the SDPF, the CHF, and the PCF may exchange information to complete charging processing on the sensing service. For details, refer to the descriptions in FIG. 4 to FIG. 8. Details are not described again.

It should be noted that FIG. 5 to FIG. 9 are independent embodiments, and the content in FIG. 5 to FIG. 9 may be combined to form a new embodiment. For example, the method in FIG. 5 and the method in FIG. 6 may be combined; or the method in FIG. 5 and the method in FIG. 7 may be combined. In conclusion, a specific combination manner of the content in FIG. 5 to FIG. 9 is not limited in embodiments of this application.

Finally, apparatus embodiments in embodiments of this application are described.

To implement functions in the methods provided in this application, the network element may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

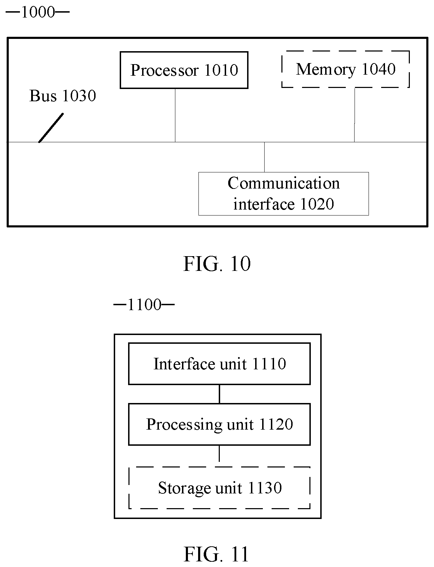

FIG. 10 is a block diagram of a communication apparatus 1000 according to an embodiment of this application. The communication apparatus 1000 includes a processor 1010 and a communication interface 1020. The processor 1010 and the communication interface 1020 may be connected to each other through a bus 1030. The communication apparatus 1000 may be a sensing service control network element, or may be a data function network element, or may be a sensing service user management network element, or may be a CHF network element, a PCF network element, or the like.

Optionally, the communication apparatus 1000 may further include a memory 1040. The memory 1040 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1040 is configured to store related instructions and data.

The processor 1010 may be one or more central processing units (central processing units, CPUs). When the processor 1010 is one CPU, the CPU may be a single-core CPU, or may be a multi-core CPU.

When the communication apparatus 1000 is a sensing service control network element, for example, the processor 1010 is configured to perform the following operations: determine charging configuration information; and send the charging configuration information to a data function network element.

When the communication apparatus 1000 is a data function network element, for example, the processor 1010 is configured to perform the following operations: receive charging configuration information; and perform charging processing on a sensing service based on the charging configuration information.

The foregoing content is merely used as an example for description. The communication apparatus 1000 is a sensing service control network element or a data function network element, and is responsible for performing the methods or the steps related to the sensing service control network element or the data function network element in the foregoing method embodiments.

The communication apparatus 1000 may be another network element, and details are not described herein.

The foregoing description is merely an example. For specific content, refer to the content in the foregoing method embodiments.

It should be noted that, for implementation of the operations in FIG. 10, refer to the corresponding descriptions of the method embodiments in FIG. 4 to FIG. 9.

FIG. 11 is a block diagram of a communication apparatus 1100 according to an embodiment of this application. The communication apparatus 1100 may be a sensing service control network element, or may be a data function network element, or may be a sensing service user management network element, or may be a CHF network element, a PCF network element, or the like.

The communication apparatus 1100 includes an interface unit 1110 and a processing unit 1120. The interface unit 1110 may include a sending unit and a receiving unit. The sending unit is configured to perform a sending action of the communication apparatus, and the receiving unit is configured to perform a receiving action of the communication apparatus. For ease of description, in this embodiment of this application, the sending unit and the receiving unit are combined into one transceiver unit. This applies throughout and will not be repeated below.

When the communication apparatus 1100 is a sensing service control network element, for example, the interface unit 1110 is configured to send charging configuration information. The processing unit 1120 is configured to determine the charging configuration information and the like.

When the communication apparatus 1100 is a second apparatus, for example, the interface unit 1110 is configured to receive charging configuration information. The processing unit 1120 is configured to perform charging processing and the like on a sensing service based on the charging configuration information.

The foregoing content is merely used as an example for description. The communication apparatus 1000 is a sensing service control network element or a data function network element, and is responsible for performing the methods or the steps related to the sensing service control network element or the data function network element in the foregoing method embodiments.

Optionally, the communication apparatus further includes a storage unit 1130, configured to store a program or code used to perform the foregoing methods.

The communication apparatus 1000 may be another network element, and details are not described herein.

The foregoing description is merely an example. For specific content, refer to the content in the foregoing method embodiments.

It should be noted that the apparatus embodiment in FIG. 11 is used to implement the content described in FIG. 4 to FIG. 9. For a specific execution step and a method performed by the apparatus in FIG. 11, refer to the content described in the foregoing method embodiments.

This application further provides a chip, including a processor, configured to invoke instructions from a memory and run the instructions stored in the memory, to cause a communication device on which the chip is installed to perform the methods in the foregoing examples.

This application further provides another chip, including an input interface, an output interface, and a processor. The input interface, the output interface, and the processor are connected to each other through an internal connection path. The processor is configured to execute code in a memory. When the code is executed, the processor is configured to perform the methods in the foregoing examples. Optionally, the chip further includes the memory. The memory is configured to store a computer program or the code.

This application further provides a processor, configured to be coupled to a memory, and configured to perform a method and a function of the network device or the terminal device in any one of the foregoing embodiments.

Another embodiment of this application provides a computer program product including instructions. When the computer program product runs on a computer, the method in the foregoing embodiments is implemented.

This application further provides a computer program. When the computer program is run on a computer, the method in the foregoing embodiments is implemented.

Another embodiment of this application provides a computer-readable storage medium. The computer-readable storage medium stores a computer program. When the computer program is executed by a computer, the method in the foregoing embodiments is implemented.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, the disclosed system, apparatus, and method may be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When functions are implemented in a form of a software functional unit and sold or used as an independent product, the functions may be stored in a computer-readable storage medium. Based on such an understanding, the technical solutions in embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or a part of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations in embodiments of this application, but are not intended to limit the protection scope in embodiments of this application. Any variation or replacement readily figured out by a person skilled in the art within the technical scope disclosed in embodiments of this application shall fall within the protection scope in embodiments of this application. Therefore, the protection scope of embodiments of this application should be subject to the protection scope of the claims.

## Claims

1. A charging method for a sensing service, comprising:
determining charging configuration information, wherein the charging configuration information is used to perform charging processing on the sensing service; and
sending the charging configuration information to a data function network element.

2. The method according to claim 1, wherein the charging configuration information comprises one or both of a charging policy or a charging parameter.

3. The method according to claim 2, wherein the charging configuration information comprises the charging parameter; and determining the charging configuration information comprises:
sending first information to a charging function network element, wherein the first information is used to request the charging parameter; and
receiving the charging parameter from the charging function network element.

4. The method according to claim 2, wherein the charging configuration information comprises the charging parameter, and determining the charging configuration information comprises:
the charging parameter is preconfigured, or the charging parameter is predefined.

5. The method according to claim 2, wherein the charging configuration information comprises the charging policy, and determining the charging configuration information comprises:
sending second information to a policy control network element, wherein the second information is used to request the charging policy; and
receiving the charging policy from the policy control network element.

6. The method according to claim 2, wherein the charging configuration information comprises the charging policy, and determining the charging configuration information comprises:
the charging policy is preconfigured, or the charging policy is predefined.

7. The method according to any one of claims 2 to 6, wherein the charging policy comprises one or both of a charging manner or a charging granularity.

8. The method according to claim 7, wherein the charging manner comprises one or both of online charging or offline charging.

9. The method according to claim 7, wherein the charging granularity comprises one or both of service-based charging or quality of service flow-based charging.

10. The method according to any one of claims 2 to 9, wherein the charging parameter comprises at least one of the following:
a charging mode, a charging event, a first charging quota, or a threshold of the charging event.

11. The method according to claim 10, wherein the charging mode comprises at least one of the following:
traffic-based charging, duration-based charging, service occurrence time point-based charging, or service occurrence count-based charging.

12. The method according to claim 10, wherein the charging event comprises at least one of the following:
traffic reaching a threshold, duration reaching a threshold, a change of a service occurrence time point, or a service occurrence count reaching a threshold.

13. The method according to claim 10, wherein the threshold of the charging event comprises at least one of the following:
a traffic threshold, a duration threshold, or a service occurrence count threshold.

14. The method according to any one of claims 1 to 13, wherein the method further comprises:
receiving charging information of the sensing service from the data function network element; and
sending third information to the charging function network element in response to the charging information, wherein the third information is used to request a second charging quota of the sensing service, and the second charging quota is associated with the charging information.

15. The method according to claim 14, wherein the method further comprises:
receiving the second charging quota from the charging function network element; and
sending the second charging quota to the data function network element.

16. The method according to any one of claims 1 to 15, wherein before determining the charging configuration information of the sensing service, the method further comprises:
receiving fourth information from a user management function network element, wherein the fourth information is used to request the sensing service.

17. A charging method for a sensing service, comprising:
receiving charging configuration information from a sensing service control network element; and
performing charging processing on the sensing service based on the charging configuration information.

18. The method according to claim 17, wherein the charging configuration information comprises one or both of a charging policy or a charging parameter.

19. The method according to claim 18, wherein the charging policy comprises one or both of a charging manner or a charging granularity.

20. The method according to claim 18, wherein the charging manner comprises one or both of online charging and offline charging.

21. The method according to claim 18, wherein the charging granularity comprises one or both of service-based charging or quality of service flow-based charging.

22. The method according to any one of claims 17 to 21, wherein the charging parameter comprises at least one of the following:
a charging mode, a charging event, a first charging quota, or a threshold of the charging event.

23. The method according to claim 22, wherein the charging mode comprises at least one of the following:
traffic-based charging, duration-based charging, service occurrence time point-based charging, or service occurrence count-based charging.

24. The method according to claim 22, wherein the charging event comprises at least one of the following:
traffic reaching a threshold, duration reaching a threshold, a change of a service occurrence time point, or a service occurrence count reaching a threshold.

25. The method according to claim 22, wherein the threshold of the charging event comprises at least one of the following:
a traffic threshold, a duration threshold, or a service occurrence count threshold.

26. The method according to any one of claims 16 to 25, wherein the method further comprises:
sending charging information of the sensing service to the sensing service control network element; and
receiving a second quota of the sensing service from the sensing service control network element, wherein the second charging quota of the sensing service is determined based on the charging information.

27. A charging method for a sensing service, comprising:
receiving registration information from a sensing service user, wherein the registration information is used to request to complete registration of the sensing service user, and the sensing service user is a user that requires the sensing service; and
sending first response information to the sensing service user, wherein the first response information is used to respond to the registration information.

28. The method according to claim 27, wherein the method further comprises:
receiving request information from the sensing service user, wherein the request information is used to request the sensing service; and
sending second response information to the sensing service user, wherein the second response information is used to respond to the request information.

29. The method according to claim 27 or 28, wherein the registration information further comprises:
a user name, a user identifier, a user type, authentication data, and a charging attribute.

30. The method according to claim 29, wherein the registration information further comprises at least one of the following:
a request-allowed sensing service type, a service-prohibited area, a user priority, or service subscription information.

31. A communication system, comprising:
a sensing service control network element, configured to determine charging configuration information, wherein the charging configuration information is used to perform charging processing on a sensing service; and
the sensing service control network element is further configured to send the charging configuration information to a data function network element; and
the data function network element, configured to receive the charging configuration information, and further configured to perform charging processing on the sensing service based on the charging configuration information.

32. A communication apparatus, comprising a processor, wherein the processor is configured to, by executing a computer program or instructions or by using a logic circuit,
cause the communication apparatus to perform the method according to any one of claims 1 to 16; or
cause the communication apparatus to perform the method according to any one of claims 17 to 26; or
cause the communication apparatus to perform the method according to any one of claims 27 to 30.

33. A communication apparatus, comprising a logic circuit and an input/output interface, wherein the input/output interface is configured to input and/or output a signal; and
the logic circuit is configured to perform the method according to any one of claims 1 to 16, or
the logic circuit is configured to perform the method according to any one of claims 17 to 26, or
the logic circuit is configured to perform the method according to any one of claims 27 to 30.

34. A computer-readable storage medium, wherein the computer-readable storage medium stores a computer program or instructions; and when the computer program or the instructions are run on a computer,
the method according to any one of claims 1 to 16 is performed; or
the method according to any one of claims 17 to 26 is performed; or
the method according to any one of claims 27 to 30 is performed.

35. A computer program product, comprising instructions, wherein when the instructions are run on a computer,
the method according to any one of claims 1 to 16 is performed; or
the method according to any one of claims 17 to 26 is performed; or
the method according to any one of claims 27 to 30 is performed.
